# EUROPEAN PATENT APPLICATION

(11) **EP 4 644 280 A1**
(43) Date of publication of application: **05.11.2025**
(21) Application number: 23911876.3
(22) Date of filing: 20.12.2023
(51) Int. Cl.: B65B 43/30

(54) **LID BODY OPENING/CLOSING DEVICE, UNMANNED TRANSPORT VEHICLE SYSTEM, AND STORAGE CASE**

(30) Priority: 28.12.2022 JP 2022212698
(71) Applicant: KYOCERA Document Solutions Inc., Osaka-shi, Osaka 540-8585 (JP)
(72) Inventor: TAMAKI Kaname, Osaka-shi, Osaka 540-8585 (JP); MASAKI Eijiro, Osaka-shi, Osaka 540-8585 (JP); KIMURA Tomonao, Osaka-shi, Osaka 540-8585 (JP); KIKUTA Tomoyuki, Osaka-shi, Osaka 540-8585 (JP); OCHIAI Masaya, Osaka-shi, Osaka 540-8585 (JP)
(74) Representative: Herrero & Asociados, S.L.
(86) International application number: PCT/JP2023/045635
(87) International publication number: WO 2024/143096

(57) **Abstract**

Provided is technology for opening and closing a lid body of a case with a simple configuration. A lid body opening/closing device (12) includes a rotation unit (71) provided above a case (CS) and configured to move toward or away from the case (CS) and rotate around a virtual vertical line (B) passing through the case (CS). The rotation unit (71) includes a lid suction pad (77) configured to move toward the case (CS) together with the rotation unit (71) so that the lid suction pad (77) is adsorbed to a lid body (122) of the case (CS) and move away from the case (CS) together with the rotation unit (71) so that the lid body (122) is raised and opened, and an abutment roller (86) positioned on an inner side of the lid body (122) raised by the lid suction pad (77) and configured to rotate together with the rotation unit (71) and contact the inner side of the lid body (122) when the lid suction pad (77) is detached from the lid body (122) and push and open the lid body (122).

## Description

### TECHNICAL FIELD

The present invention relates to a lid body opening/closing device for opening and closing a lid body of a storage housing, an automatic guided vehicle system using the same, and a storage housing used therein. Particularly, the present invention relates to a lid body of a storage housing and technology for opening and closing the lid body.

### BACKGROUND ART

A lid body for opening and closing an opening is provided in a storage housing (e.g., a container) so that the lid body can be freely opened and closed. In a state in which the lid body is opened and the opening is opened, stored objects are input to and output from the storage housing. For example, the container with a lid body opening/closing device described in Patent Literature 1 includes a container body having an opening at the top, a pair of lids configured to divide the opening in a left-right direction and close the opening, and an opening/closing device configured to open and close the pair of lids between a closed posture in which the opening is closed and an open posture in which the opening is opened.

Moreover, various systems for moving articles using an automatic guided vehicle (AGV) have been proposed. For example, in an automatic guided vehicle system described in Patent Literature 2, when baggage is transported by a conveyor, and the baggage arrives at an end of the conveyor, a nearby automatic guided vehicle is called, the baggage is loaded onto the automatic guided vehicle by a robot, the automatic guided vehicle moves the baggage to a shelf, and the baggage is stored on the shelf.

### Citation List

### Patent Literature

Patent Literature 1: Japanese Unexamined Patent Application, First Publication No. 2019-064675
Patent Literature 2: Japanese Unexamined Patent Application, First Publication No. 2020-123196

### SUMMARY OF INVENTION

Here, in Patent Literature 2, when baggage is a storage housing, it is desirable not only to mount the storage housing on the automatic guided vehicle, but also to open and close a lid of the storage housing so that stored objects are input to and output from the storage housing. For example, the application of an arm robot or the like that performs such a task is assumed. However, when such a robot is applied, a system configuration becomes complicated and system costs become high.

Moreover, when an opening/closing device that opens and closes the lid is provided on the container itself as in Patent Literature 1, a container configuration becomes complicated and container costs become high.

The present invention has been made in consideration of the above circumstances, and an objective of the present invention is to enable a lid body of a storage housing to be opened and closed with a simple configuration.

According to an aspect of the present invention, there is provided a lid body opening/closing device including: a rotation unit provided above a position where a storage housing is placed and configured to move toward or away from the storage housing and rotate around a virtual vertical line passing through the storage housing, wherein the rotation unit includes a lid suction pad configured to move toward the storage housing together with the rotation unit so that the lid suction pad is adsorbed to the lid body of the storage housing and to move together with the rotation unit in a direction away from the storage housing to raise and open the lid body; and an abutment member provided at a position on the rotation unit on an inner side of the lid body raised by the lid suction pad and configured to rotate together with the rotation unit, contact the inner side of the lid body, and push the lid body from the inner side in a direction in which the lid body is opened when the lid suction pad is detached from the lid body.

Moreover, according to an aspect of the present invention, there is provided an automatic guided vehicle system including: the lid body opening/closing device according to the above-described aspect of the present invention; a conveyor configured to load and transport an article; and an automatic guided vehicle, wherein the automatic guided vehicle includes a travel drive device configured to cause the automatic guided vehicle to travel by rotating the drive wheels of the automatic guided vehicle; a pair of arms provided at positions on the automatic guided vehicle on a downstream side and an upstream side in a direction in which the article is transported by the conveyor when the automatic guided vehicle travels along the conveyor and configured to extend in a direction perpendicular to the direction in which the article is transported, face each other at positions spaced apart by a distance corresponding to a width of the article in the direction in which the article is transported by the conveyor, reciprocate in the perpendicular direction to project outward from the automatic guided vehicle, and retract into the automatic guided vehicle from a projected position; an arm drive device configured to cause each of the arms to reciprocate in the perpendicular direction; first claw devices provided on distal-end sides of the pair of arms and configured to project from arm portions at the distal-end sides to the space between the arms and retract into the arm portions; a first claw drive device configured to cause each of the first claw devices to perform projecting and retracting actions; and a control device configured to control the travel drive device, the arm drive device, and the first claw drive device so that the automatic guided vehicle is allowed to travel along the conveyor at a travel speed faster than a transport speed of the article, the arm provided on the upstream side is allowed to project above the conveyor from the automatic guided vehicle, the arm provided on the downstream side is projected above the conveyor from the automatic guided vehicle when the arm provided on the upstream side in the transport direction moves to a position of the article being transported by the conveyor, and the pair of arms are retracted from above the conveyor into the automatic guided vehicle after each first claw device is projected from a distal-end side of each of the pair of arms to a space between the pair of arms in a state in which the article is located between the pair of arms, and wherein the control device controls the travel drive device, the arm drive device, and the first claw drive device so that the automatic guided vehicle is moved to the lid body opening/closing device, each claw device is projected from a rear-end side of each of the pair of arms to the space between the pair of arms, and the pair of arms are pushed out from the automatic guided vehicle to a lid opening/closing device side.

Moreover, according to an aspect of the present invention, there is provided a storage housing of which a lid body is opened and closed by a lid body opening/closing device, wherein the storage housing includes a hollow main body consisting of a rectangular prism with an opening formed therein; and a pair of lid bodies provided on two edges opposite to each other among edges of the main body forming the opening in a rectangular shape in top view and configured to open and close the opening, wherein one edge of the lid body is rotatably supported on the edge of the main body, wherein each lid body includes a wide portion having a predetermined large dimension that is a width dimension in a direction orthogonal to a direction in which one edge of the lid body extends; and a narrow portion having a predetermined small dimension smaller than the large dimension, wherein the lid body opening/closing device includes a rotation unit provided above a position where a storage housing is placed and configured to move toward or away from the storage housing and rotate around a virtual vertical line passing through the storage housing, wherein the rotation unit includes a lid suction pad configured to move toward the storage housing together with the rotation unit so that the lid suction pad is adsorbed to the lid body of the storage housing and to move together with the rotation unit in a direction away from the storage housing to raise and open the pair of lid bodies; and an abutment member provided at a position on the rotation unit on an inner side of each of the pair of lid bodies raised by the lid suction pad and configured to rotate together with the rotation unit, contact the inner side of each of the pair of lid bodies, and push each of the pair of lid bodies from the inner side in a direction in which the pair of lid bodies are opened when the lid suction pad is detached from each of the pair of lid bodies, and wherein the lid suction pad is adsorbed to an outer side of the wide portion of each of the pair of lid bodies when the lid suction pad is adsorbed to the lid body.

### BRIEF DESCRIPTION OF DRAWINGS

FIG. 1 is a plan view schematically showing an automatic guided vehicle system to which a lid body opening/closing device according to an embodiment of the present invention is applied.
FIG. 2 is a perspective view showing an automatic guided vehicle in the automatic guided vehicle system.
FIG. 3 is a perspective view showing a sliding state of each arm of the automatic guided vehicle.
FIG. 4 is a diagram schematically showing a rack gear and a pinion gear for reciprocating the arm.
FIG. 5A is a perspective view showing a mechanism for projecting and retracting first and second claw devices of each arm.
FIG. 5B is a plan view showing the mechanism.
FIG. 6 is a block diagram showing a control system of the automatic guided vehicle.
FIG. 7 is a flowchart showing a control procedure for transferring a storage housing being transported by a conveyer to the automatic guided vehicle and moving the storage housing with the automatic guided vehicle.
FIG. 8A is a perspective view showing a state in which a storage housing is being transported by a conveyer.
FIG. 8B is a perspective view showing a state in which the automatic guided vehicle has caught up with the storage housing being transported by the conveyer.
FIG. 9 is a perspective view showing a state in which one arm located on an upstream side in a transport direction of the storage housing in the automatic guided vehicle comes into contact with the storage housing being transported by the conveyer.
FIG. 10A is a perspective view showing a state in which a storage housing being transported by a conveyer is sandwiched between the arms of an automatic guided vehicle.
FIG. 10B is a perspective view showing a process in which the storage housing being transported by the conveyer is transferred to the automatic guided vehicle.
FIG. 11 is a perspective view showing a state in which the storage housing being transported by the conveyer is sandwiched between the arms of the automatic guided vehicle and a first claw device on an inner side of a distal end of each arm is projected.
FIG. 12 is a perspective view showing the automatic guided vehicle carrying a storage housing transferred from the conveyer.
FIG. 13 is a perspective view showing a state in which the automatic guided vehicle has stopped in front of a lid body opening/closing device.
FIG. 14 is a perspective view showing a state in which the storage housing is sandwiched between the arms of an automatic guided vehicle and a second claw device on an inner side of a rear end of each arm is projected.
FIG. 15 is a perspective view showing a process in which the storage housing is transferred from the automatic guided vehicle to the lid body opening/closing device.
FIG. 16 is a perspective view schematically showing the lid body opening/closing device of the present embodiment.
FIG. 17A is a perspective view showing a rotation unit in the lid body opening/closing device.
FIG. 17B is a plan view showing the rotation unit in the lid body opening/closing device.
FIG. 17C is a side view showing the rotation unit in the lid body opening/closing device.
FIG. 18 is a block diagram showing a control system of the lid body opening/closing device of the present embodiment.
FIG. 19A is a perspective view showing the storage housing.
FIG. 19B is a plan view showing the storage housing.
FIG. 20A is a perspective view showing a state in which a process of opening each lid body of the storage housing is in progress.
FIG. 20B is a perspective view showing a state in which each lid body is opened.
FIG. 21 is a flowchart showing a control procedure for opening and closing each lid body of the storage housing by the lid body opening/closing device.
FIG. 22A is a plan view showing the rotation unit and the storage housing positioned below the rotation unit.
FIG. 22B is a side view showing the rotation unit and the storage housing positioned below the rotation unit.
FIGS. 23A and 23B are side views showing a process in which the storage housing is raised and moves toward the rotation unit.
FIG. 24A is a plan view showing a process for opening the lid of the storage housing with the rotation unit.
FIG. 24B is a side view showing a process for opening the lid of the storage housing with the rotation unit.
FIG. 25A is a plan view showing a process for opening the lid of the storage housing with the rotation unit.
FIG. 25B is a front view showing a process for opening the lid of the storage housing with the rotation unit.
FIG. 26 is a side view showing a state in which the lid of the storage housing is opened with the rotation unit.
FIG. 27A is a plan view showing a state in which the lid of the storage housing is opened with the rotation unit.
FIG. 27B is a front view showing a state in which the lid of the storage housing is opened with the rotation unit.
FIG. 28 is a side view showing the rotation unit and the storage housing, the lid of which is opened and lowered.
FIG. 29 is a side view showing a process for removing stored objects from the storage housing with the rotation unit.
FIG. 30 is a side view showing the process for placing the stored objects removed by the rotation unit on a movable shelf.
FIG. 31A is a plan view showing a state immediately before the lid of the storage housing is closed by the rotation unit.
FIG. 31B is a front view showing a state immediately before the lid of the storage housing is closed by the rotation unit.
FIG. 32A is a plan view showing a process for closing the lid of the storage housing with the rotation unit.
FIG. 32B is a front view showing a process for closing the lid of the storage housing with the rotation unit.
FIG. 33 is a front view showing a process for closing the lid of the storage housing with the rotation unit.

### DESCRIPTION OF EMBODIMENTS

Hereinafter, a lid body opening/closing device, an automatic guided vehicle system, and a storage housing according to an embodiment of the present invention will be described with reference to the drawings.

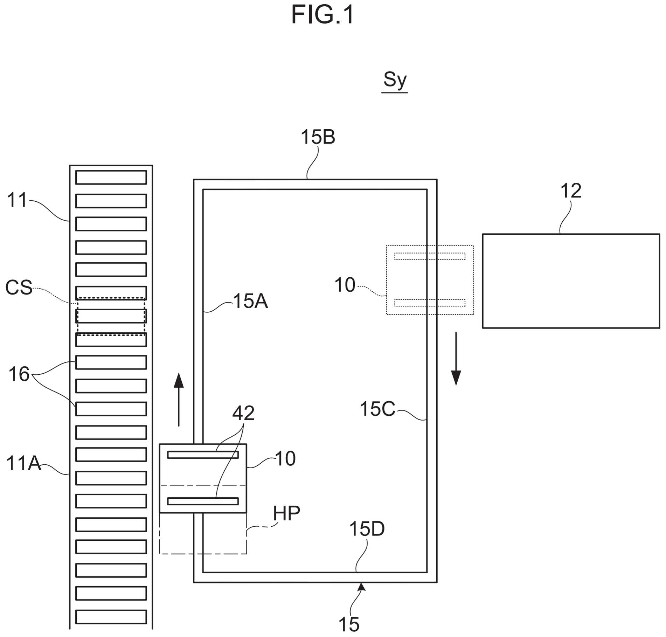

FIG. 1 is a schematic diagram showing the automatic guided vehicle system according to the embodiment of the present invention. An automatic guided vehicle system Sy shown in FIG. 1 includes an automatic guided vehicle 10 and a conveyor 11 for transporting articles. The automatic guided vehicle system Sy is installed in an indoor space such as a warehouse including a lid body opening/closing device 12.

First, a configuration of the automatic guided vehicle system Sy and a configuration and operation of the automatic guided vehicle 10 will be described. Subsequently, a configuration and operation of the lid body opening/closing device 12 of the present embodiment will be described.

The automatic guided vehicle 10 autonomously travels along a travel line 15 laid on a floor surface. For example, the travel line 15 is a magnetic tape attached to the floor surface and a magnetic sensor for detecting the magnetic tape is provided on the automatic guided vehicle 10. The automatic guided vehicle 10 detects a position of the magnetic tape (the travel line 15) with the magnetic sensor and performs steering control in accordance with the position of the travel line 15 to cause the automatic guided vehicle 10 to travel along the travel line 15. Alternatively, the travel line 15 is a colored tape attached to the floor surface and has the color or reflectance different from that of the floor surface. An optical sensor such as a CCD for detecting the colored tape is provided in the automatic guided vehicle 10. In the automatic guided vehicle 10, a control device (to be described below) detects the position of the colored tape (the travel line 15) on the basis of information obtained from the optical sensor and performs the steering control according to the position of the travel line 15 to cause the automatic guided vehicle 10 to travel along the travel line 15. Both a method using the magnetic tape and the magnetic sensor and a method using the colored tape and the optical sensor are known technologies.

The conveyor 11 is a structure in which a plurality of rollers 16 are arranged in a transport direction of a case (one example of a storage housing) CS. Each roller 16 is supported by respective axes intersecting the transport direction of the case CS, and is driven to rotate in one direction to transport the case CS on each roller 16.

The travel line 15 is formed by connecting a first travel line 15A, a second travel line 15B, a third travel line 15C, and a fourth travel line 15D in a rectangular shape. Each of the travel lines 15A to 15D is linear. The first travel line 15A extends parallel to the direction in which the first conveyor 11A extends (the direction in which the case CS is transported). The fourth travel line 15D passes near the lid body opening/closing device 12.

The automatic guided vehicle 10 starts traveling from a waiting position HP provided near a start edge of the first travel line 15A, travels along the first travel line 15A parallel to the first conveyor 11A, changes the travel direction by 90 degrees at an end edge of the first travel line 15A, and transitions to traveling along the second travel line 15B. The automatic guided vehicle 10 further changes the travel direction by 90 degrees at the end edge of the second travel line 15B and transitions to traveling along the third travel line 15C. The automatic guided vehicle 10 travels along the third travel line 15C to reach the lid body opening/closing device 12, and then changes the travel direction by 90 degrees at the end edge of the third travel line 15C, and transitions to traveling along the fourth travel line 15D. The automatic guided vehicle 10 further changes the travel direction by 90 degrees at the end edge of the fourth travel line 15D, transitions to traveling along the first travel line 15A, and returns to the waiting position HP near the start edge of the first travel line 15A.

Moreover, the automatic guided vehicle 10 transfers the case CS being transported by the conveyor 11 to the automatic guided vehicle 10 while traveling parallel to the conveyor 11 along the first travel line 15A. Also, the automatic guided vehicle 10 stops in front of the lid body opening/closing device 12 while traveling along the third travel line 15C via the second travel line 15B. At this position, the automatic guided vehicle 10 transfers the case CS from the automatic guided vehicle 10 to the lid body opening/closing device 12, and also receives the case CS from the lid body opening/closing device 12 to the automatic guided vehicle 10.

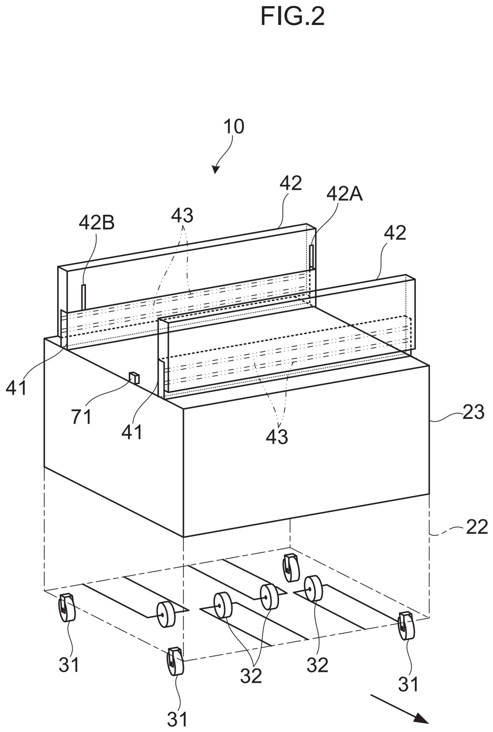

FIG. 2 is an enlarged perspective view schematically showing the automatic guided vehicle 10. As shown in FIG. 2, the automatic guided vehicle 10 has a configuration in which a travel device 22 is provided on a lower side of the vehicle body and a working device 23 is provided on an upper side of the vehicle body.

Casters 31 are provided at the four corners of the bottom of the travel device 22, and a plurality of drive wheels 32 are provided at a distance from each other on the inner side of the bottom of the travel device 22. Each drive wheel 32 is rotationally driven by a travel drive motor 33 so that the automatic guided vehicle 10 travels and the wheel of each caster 31 is driven and rotated. Moreover, a travel drive motor 33 that rotates and drives the drive wheel 32 is controlled for each drive wheel 32, and the rotational speed of each drive wheel 32 is adjusted, and the travel direction of the automatic guided vehicle 10 is changed. In FIG. 2, a mechanism including a drive source of each drive wheel 32 is not shown.

A pair of support walls 41 are arranged opposite to each other and projected from the upper surface of the working device 23. Each support wall 41 supports an arm 42 on its upper part and outer side wall. Each arm 42 is, for example, a hollow housing-like member, and is supported by each support wall 41 via slide rails 43 to be slidable along the support wall 41. A distance between arms 42 is set to a predetermined distance that is slightly longer than the width of the case CS transported by the conveyor 11, and the case CS can be inserted and sandwiched between the arms 42.

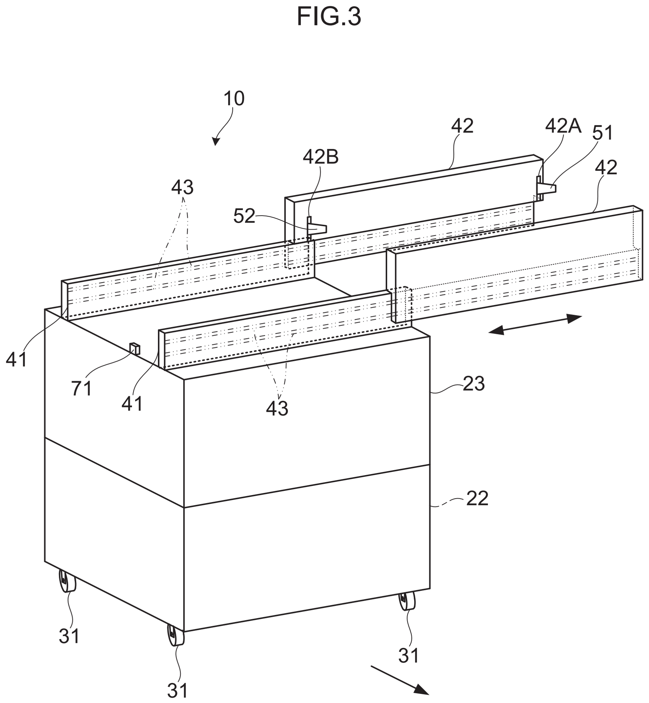

FIG. 3 is a perspective view showing a sliding state of each arm 42. Each arm 42 is slidably supported by two slide rails 43 extending horizontally relative to the support wall 41, each arm 42 is guided in the movement direction, and each arm 42 reciprocates in its longitudinal direction. Each slide rail 43, for example, has a configuration called a three-stage pull, and has a configuration in which its part projects and moves toward the outer side, which is the side of the working device 23. The slide rail 43 has a first rail, which is a part of the slide rail 43 and is provided on the side wall of the support wall 41, and a second rail, which is engaged with and supported by the first rail and guided in the movement direction by the first rail, and moves to the outer side, which is the side of the working device 23. The second rail is attached to the arm 42. Thereby, each arm 42 reciprocates in the horizontal direction and each arm 42 as a whole can project outward from the automatic guided vehicle 10 and can be retracted into the automatic guided vehicle 10 from a projected position.

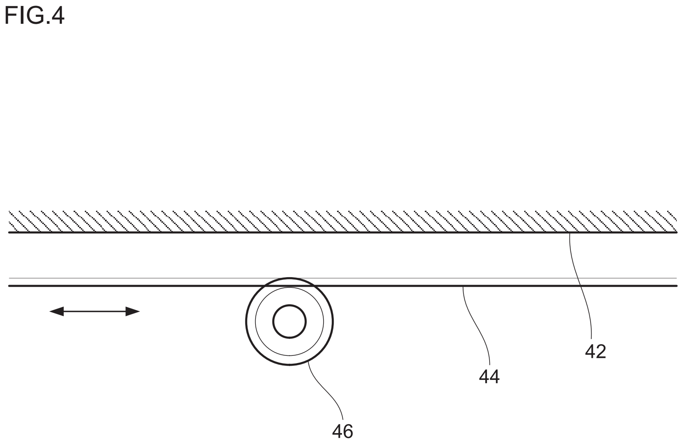

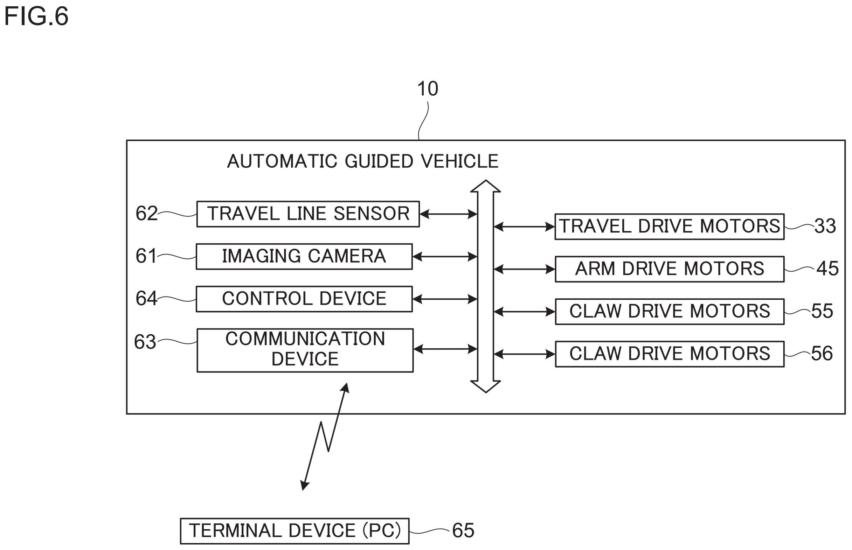

As shown in FIG. 4, a rack gear 44 is provided at a lower end of each arm 42. Moreover, an arm drive motor 45 (shown in FIG. 6) is provided on each support wall 41 and a pinion gear 46 is fixed to the output shaft of each arm drive motor 45. If each arm drive motor 45 rotates back and forth, each pinion gear 46 rotates back and forth, and each rack gear 44 and each arm 42 are guided in the movement direction by the slide rail 43 and move in a reciprocation motion. In addition, the outward movement of the arm 42 in the movement direction is limited to a position where the arm 42 remains engaged with and supported by the support wall 41 and the slide rail 43, as shown in FIG. 3, according to the engagement of the first and second rails of the slide rails 43 and the rotation control of the arm drive motor 45.

Moreover, as shown in FIGS. 2 and 3, a slit 42A is formed in the side surface portion on the inner side (the side facing the other opposing arm 42) of the distal end of each arm 42 and a first claw device 51, which is projected to the space between the arms 42 through the slit 42A, is provided. Moreover, a slit 42B is formed in the side surface portion on the inner side (the side facing the other opposing arm 42) of the rear end (base end) of the arm 42 and a second claw device 52, which is projected to the space between the arms 42 through the slit 42B, is provided.

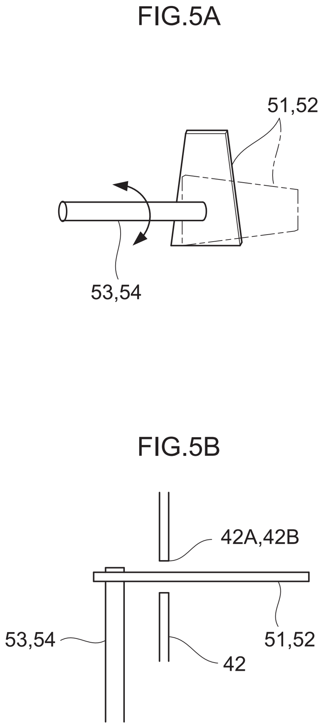

As shown in FIGS. 5A and 5B, each first claw device 51 is supported by a rotating shaft 53 inside the hollow housing-like arm 42 and each second claw device 52 is supported by a rotating shaft 54 inside the hollow housing-like arm 42. Each first claw device 51 is rotated back and forth by a claw drive motor 55 (shown in FIG. 6) connected to each rotating shaft 53, and performs an action for projecting from the slit 42A to the space between the arms 42 and an action for moving from the space to retract into the arm 42. Each second claw device 52 is rotated back and forth by a claw drive motor 56 (shown in FIG. 6) connected to each rotating shaft 54, and performs an action for projecting from the slit 42B to the space between the arms 42 and an action for moving from the space to retract into the arm 42.

An imaging camera, for example, made of a CCD or the like, is provided on the working device 23. When the automatic guided vehicle 10 travels along the first travel line 15A in parallel to the first conveyor 11A, the imaging camera 61 (FIG. 6) is oriented to face the space above the first conveyor 11A. In the present embodiment, the imaging camera 61 is arranged on a proximal-end side of each arm 42 in a central portion of an area sandwiched between the two support walls 41 on the working device 23 in the travel direction of the automatic guided vehicle 10. The imaging camera 61 captures an image of a two-dimensional code (e.g., a QR code (registered trademark)) Q or a mark attached to the case CS transported on the first conveyor 11A. In addition, the imaging camera 61 may be arranged at a position on the outer side of one of the support walls 41 on the working device 23 in the travel direction of the automatic guided vehicle 10 (the outer side of the area between the two support walls 41) as the proximal-end side of each arm 42 or the side wall side facing the other support wall 41 as the upper part of one support wall 41. Furthermore, the imaging camera 61 may be arranged at another position that is a position other than the proximal-end side of each arm 42 as long as it is possible to image a two-dimensional code Q or a mark attached to the case CS to be transported on the first conveyor 11A.

FIG. 6 is a block diagram showing a control system of the automatic guided vehicle 10. As shown in FIG. 6, the automatic guided vehicle 10 includes: the travel drive motors 33 configured to rotate and drive the drive wheels 32 of the travel device 22; the arm drive motors 45 configured to move the arms 42 of the working device 23 in the horizontal direction; the claw drive motors 55 configured to cause the first claw devices 51 to perform an action for projecting from the slits 42A on the inner side of both ends of each arm 42 into the space between the arms 42 and an action for retracting within the arm 42; the claw drive motors 56 configured to cause the second claw devices 52 to perform an action for projecting from the slits 42B on the inner side of both ends of each arm 42 to the space between the arms 42 and an action for retracting within the arm 42; the imaging camera 61 configured to image a two-dimensional code Q attached to the case CS on the first conveyor 11A; the travel line sensor 62 configured to detect the travel line 15; a communication device 63; and the control device 64.

The communication device 63 is a communication interface including a communication module such as a LAN chip (not shown), and is connected to a terminal device 65 via a wired or wireless LAN to transmit and receive data to and from the terminal device 65. The terminal device 65 is, for example, a personal computer (PC), and is operated by the user.

The control device 64 is configured to include a processor, a random-access memory (RAM), a read only memory (ROM), and a dedicated hardware circuit. The processor is, for example, a central processing unit (CPU), an application-specific integrated circuit (ASIC), a micro processing unit (MPU), or the like. The control device 64 integrally controls the automatic guided vehicle 10 according to the operation of the processor in accordance with a control program stored in the ROM.

For example, the control device 64 detects the position of the travel line 15 on the basis of the detection output of the travel line sensor 62, and controls the driving of the travel drive motor 33 of the drive wheel 32 for each drive wheel 32 in accordance with the detected position of the travel line 15, adjusts the rotational speed of the drive wheel 32, changes the travel direction of the automatic guided vehicle 10, and performs operation control to cause the automatic guided vehicle 10 to travel along the travel line 15 in a state in which the longitudinal direction of each arm 42 is perpendicular to the travel line 15. Moreover, the control device 64 adjusts the travel speed V of the automatic guided vehicle 10.

Moreover, the control device 64 controls the driving of each arm drive motor 45 so that each arm 42 moves in a reciprocation motion and controls the driving of the claw drive motors 55 and 56 so that claw devices 51 and 52 are projected from the slits 42A and 42B formed on both ends of each arm 42 or are retracted into the arm 42.

Furthermore, the control device 64 acquires an image captured by the imaging camera 61, analyzes the image, and identifies the two-dimensional code Q included in the image.

The automatic guided vehicle 10 configured as described above stops and waits at the waiting position HP under the control of the control device 64 and drives each arm 42 to transfer the case CS being transported by the first conveyor 11A to the automatic guided vehicle 10 while traveling along the first travel line 15A in parallel to the first conveyor 11A if the first conveyor 11A starts the transportation of the case CS. Furthermore, under the control of the control device 64, the automatic guided vehicle 10 travels along a path of the first travel line 15A → the second travel line 15B → the third travel line 15C, moves to the front of the lid body opening/closing device 12 and stops, transfers the case CS to the lid body opening/closing device 12, travels along a path of the third travel line 15C → the fourth travel line 15D → the first travel line 15A, and returns to the waiting position HP.

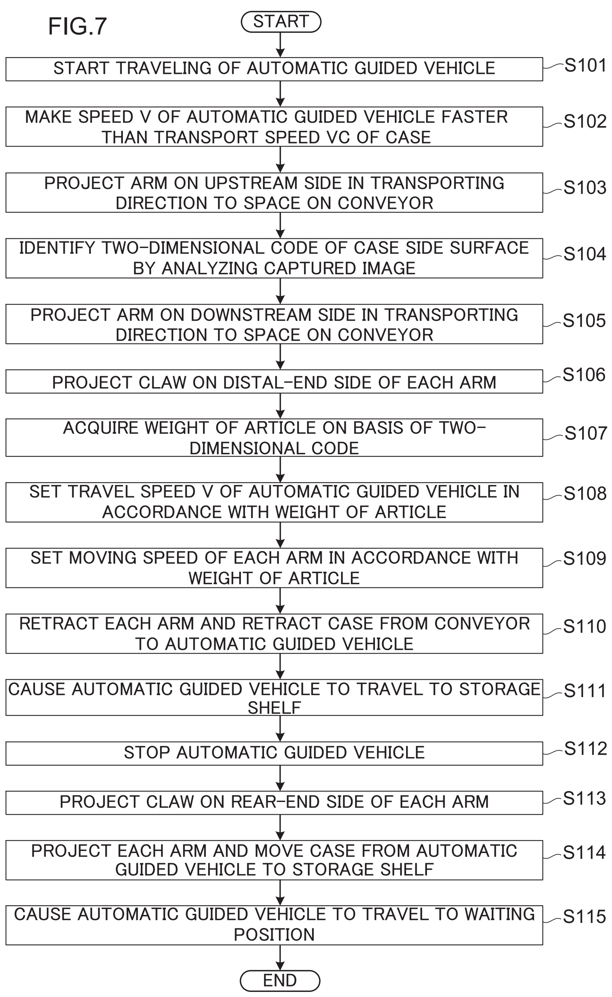

Next, a control procedure for transferring the case CS being transported by the conveyor 11 to the automatic guided vehicle 10 as described above and moving the case CS with the automatic guided vehicle 10 will be described in detail with reference to the flowchart shown in FIG. 7 and the like.

As shown in FIG. 1, the case CS starts to be transported by the second conveyor 11B in a state in which the automatic guided vehicle 10 is waiting at the waiting position HP of the first travel line 15A. The waiting position HP is set on the side of the position where it is connected to the first conveyor 11A (the starting end of the first conveyor 11A) as the end of the second conveyor 11B. The case CS located on the second conveyor 11B is transported in a posture in which the attached two-dimensional code Q faces the waiting position HP. The case CS transported to a position indicated by a dashed line in FIG. 1 is subsequently transported by the first conveyor 11A in the transport direction switched to the direction of the arrow shown in FIG. 1.

When the case CS is transported to the position indicated by the dashed line in FIG. 1, the automatic guided vehicle 10 located at the waiting position HP captures an image of the two-dimensional code Q of the case CS with the imaging camera 61. The imaging camera 61 of the automatic guided vehicle 10 located at the waiting position HP is provided at a position facing the two -dimensional code Q on the side surface of the case CS. The two-dimensional code Q contains identification information indicating an ID unique to the case CS. In the automatic guided vehicle 10, the control device 74 analyzes the two-dimensional code Q captured by the imaging camera 61 and determines whether an ID indicated in the identification information is the same as an ID indicated in the identification information previously received from the terminal device 81 via the communication device 73.

When the control device 74 determines that the above-described IDs are the same, the automatic guided vehicle 10 starts traveling in the direction of the arrow shown in FIG. 1 (S101). At this time, it is assumed that the case CS has started to be transported by the first conveyor 11A without changing its posture and has already passed the position indicated by the dashed line in FIG. 1, i.e., the waiting position HP.

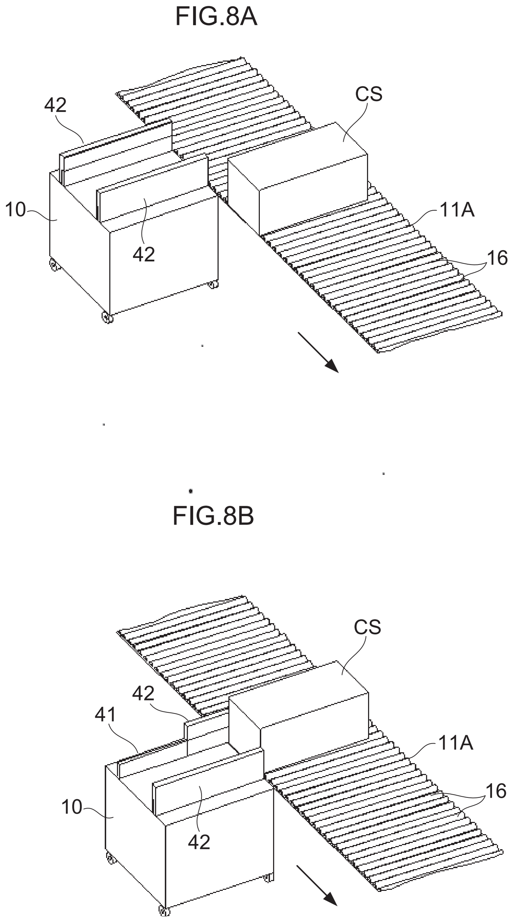

The control device 64 detects the position of the travel line 15 on the basis of the detection output of the travel line sensor 62 and controls the driving of the travel drive motors 33 of the drive wheels 32 in accordance with the detected position of the travel line 15, such that the automatic guided vehicle 10 is allowed to travel along the first travel line 15A in parallel to the first conveyor 11A at a position close to the first conveyor 11A according to a posture in which an extending direction of each arm 42 extends (the longitudinal direction of the arm 42) is perpendicular to the travel line 15, as shown in FIG. 8A (S102). At this time, the control device 64 sets the travel speed V of the automatic guided vehicle 10 to a predetermined travel speed VA faster than the transport speed VC of the case CS in the first conveyor 11A (S102).

Moreover, the control device 64 controls the driving of one of the arm drive motors 45 so that one of the arms 42 located on the upstream side in the transport direction of the case CS is projected to the space above the conveyor 11 as shown in FIG. 8B (S103).

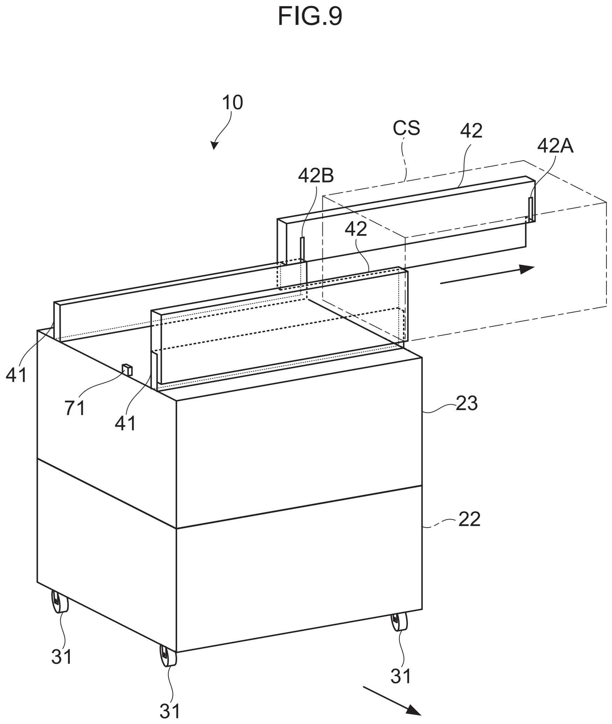

At this time, because the control device 64 sets the travel speed V of the automatic guided vehicle 10 to the travel speed VA faster than the transport speed VC of the case CS in the first conveyor 11A, the one arm 42 located on the upstream side in the transport direction of the case CS and projected to the space above the first conveyor 11A catches up with and comes into contact with the case CS as shown in FIGS. 8B and 9.

Moreover, a predetermined mark (such as a hole formed in the side surface or a predetermined image printed on the side surface, or a two-dimensional code Q) is provided on the side surface of the case CS facing the automatic guided vehicle 10 side. Because the imaging camera 61 is provided at a position facing the two-dimensional code Q capable of imaging the side surface of the case CS when the one arm 42 catches up with and comes into contact with the case CS, the mark is imaged by the imaging camera 61 when the one arm 42 described above catches up with and comes into contact with the case CS.

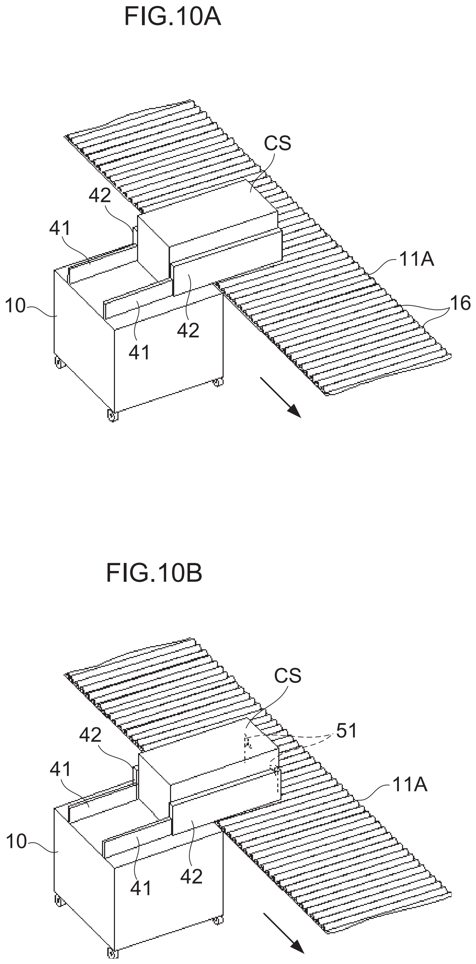

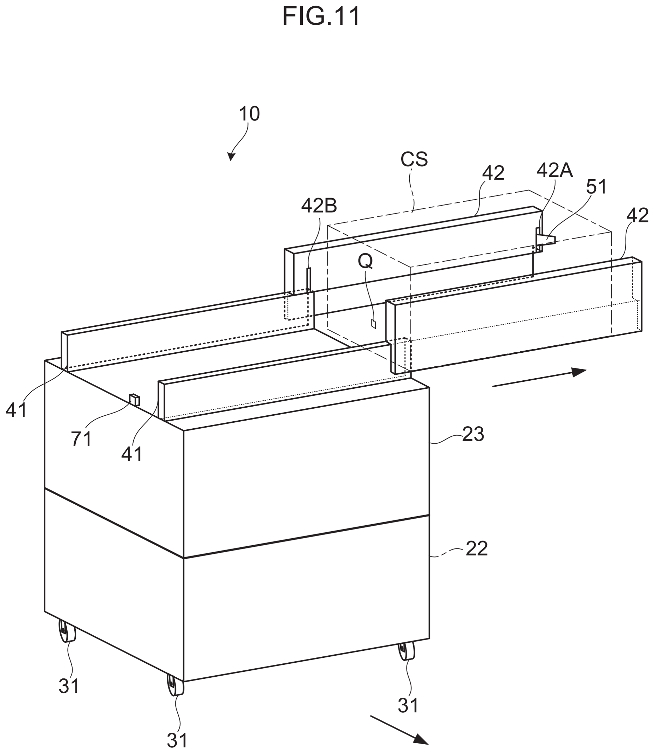

The control device 74 acquires the image captured by the imaging camera 61, analyzes this image, and determines that the one arm 42 has caught up with and come into contact with the case CS if an image showing the above-described mark is identified in the image (S104) and controls the driving of the arm drive motor 45 for driving the other arm 42 so that the other arm 42 located on the downstream side in the transport direction of the case CS is projected into the space above the first conveyor 11A as shown in FIG. 10A (S105). Because a distance between the arms 42 is set to a distance equivalent to the width of the case CS, which is slightly longer than the width of the case CS, the case CS is sandwiched between the arms 42 according to the projection of the other arm 42. Moreover, according to this projection, each arm 42 projected under the control of the control device 64 has a length so that the distal end of the arm 42 reaches a position beyond the rear end of the case CS in the direction perpendicular to the transport direction of the case CS. The control device 64 projects the movable arm 42 until the distal end of the arm 42 reaches a position beyond the rear end of the case CS in this way (FIGS. 10A and 11).

Subsequently, the control device 64 controls the driving of each claw drive motor 55 so that the first claw device 51 on the inner side of the distal end of each arm 42 is projected as shown in FIGS. 10B and 11 (S106).

The two-dimensional code Q identified in S104 includes information indicating a weight of stored objects stored in the case CS. This information may indicate the weight itself, or may indicate, for example, a weight of a single object that is stored and the number of stored objects. The control device 64 discriminates the weight of the stored objects on the basis of the above-described information and calculates the weight of an article by adding the known weight of the case CS to the weight of the stored objects (S107). The above-described information may indicate the weight of the article itself, which is a sum of the weight of the stored objects and the known weight of the case CS. In this case, the control device 64 acquires the weight of the article directly from the above-described information.

At this time, the control device 64 controls the driving of the travel drive motors 33 of the drive wheels 32 so that the automatic guided vehicle 10 is allowed to travel at the travel speed VA set in S102. After S107, the control device 64 compares the weight of the article calculated in S107 with a preset threshold value and maintains the travel speed V of the automatic guided vehicle 10 at the travel speed VA when it is determined that the weight of the article is less than the threshold value.

Moreover, if the weight of the article is greater than or equal to the above-described threshold value, the control device 64 reduces the travel speed V of the automatic guided vehicle 10 to a predetermined travel speed VD that is greater than or equal to the transport speed VC of the case CS in the first conveyor 11A and is slower than the travel speed VA set in S102 (S108). Thereby, when the weight of the article contained in the case CS is greater than or equal to the threshold value and is heavy, the travel speed V of the automatic guided vehicle 10 is reduced while being maintained at the transport speed VC or more of the case CS. Therefore, when the automatic guided vehicle 10 is traveling while the case CS is being pushed by the above-described one arm 42 that has been projected, because the load on each travel drive motor 33 can be reduced and the load from the case CS applied to the one arm 42 can also be reduced, the automatic guided vehicle 10 can be allowed to travel stably.

Furthermore, the control device 64 sets the rotational speed of each arm drive motor 45 in accordance with the weight of the article calculated in S107 (S109). For example, the control device 64 sets the rotational speed of each arm drive motor 45 to a slower speed as the weight of the article increases. For example, a data table indicating the weight of the article and the rotational speed of each arm drive motor 45 corresponding thereto for each article weight is stored in a ROM built into the control device 64. The control device 64 reads the rotational speed of each arm drive motor 45 corresponding to the weight of the article calculated in S107 from the data table, and sets the read rotational speed as the rotational speed of each arm drive motor 45 according to the weight of the article calculated in S107.

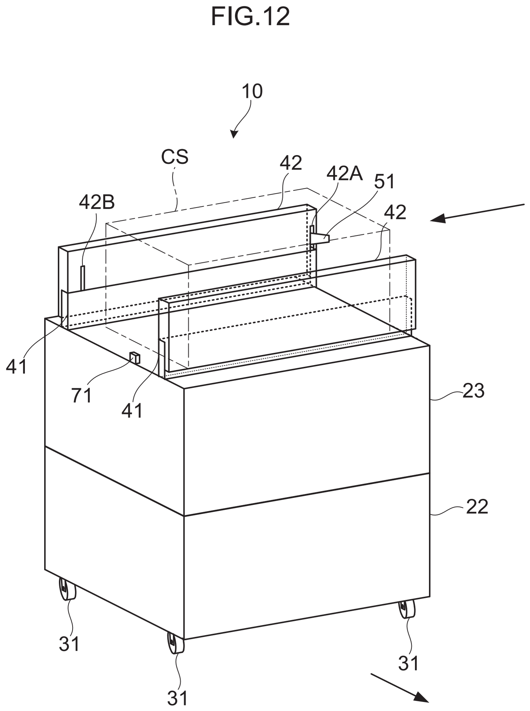

Also, the control device 64 controls the driving of each arm drive motor 45, rotates each arm drive motor 45 at the rotational speed set in S108, retracts each arm 42 from the space above the first conveyor 11A, and retracts each arm 42 from the position projected as described above into the area inside the working device 23 of the automatic guided vehicle 10 as shown in FIG. 12. When each arm 42 is retracted, each first claw device 51 is hooked on an end of the case CS and each arm 42 retracts the case CS from the first conveyor 11A to the working device 23 of the automatic guided vehicle 10 (S110). That is, the retraction of each arm 42 causes the case CS to move from a position on the first conveyor 11A onto the working device 23 of the automatic guided vehicle 10. Thereby, as the weight of the article increases, the movement speed of each arm 42 decreases. The case CS is transferred from the first conveyor 11A to the working device 23 of the automatic guided vehicle 10 at a slower speed. Therefore, when each arm 42 retracts the case CS into the working device 2 of the automatic guided vehicle 10, the load applied to each arm drive motor 45 can be reduced. Moreover, the movement of the case CS from its position on the first conveyor 11A to the working device 23 of the automatic guided vehicle 10 is performed in a state in which the transport operation of the first conveyor 11A and the traveling of the automatic guided vehicle 10 are continuing. However, because this movement is performed at a low speed, the case CS can be stably and reliably moved from its position on the first conveyor 11A onto the working device 23 of the automatic guided vehicle 10.

Subsequently, the control device 64 controls the driving of each of the claw drive motors 55 so that each of the first claw devices 51 is retracted and stored in the arm 42.

In this way, the case CS being transported by the first conveyor 11A is transferred from the first conveyor 11A to the automatic guided vehicle 10 while the automatic guided vehicle 10 is traveling parallel to the first conveyor 11A along the first travel line 15A.

Furthermore, the control device 64 detects the position of the travel line 15 on the basis of the detection output of the travel line sensor 62, controls the driving of the travel drive motors 33 of the drive wheels 32 in accordance with the detected position of the travel line 15, and causes the automatic guided vehicle 10 to travel along the path of the first travel line 15A → the second travel line 15B → the third travel line 15C (S111).

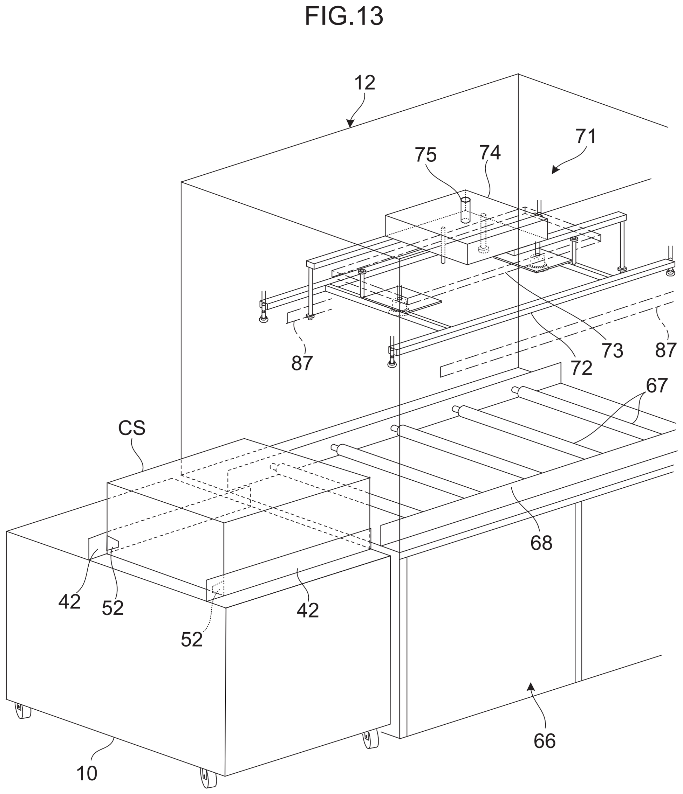

When the automatic guided vehicle 10 travels to the position of a lid body opening/closing devices 12 installed in parallel, a two-dimensional code Q2 attached to a position facing the automatic guided vehicle 10 on the lid body opening/closing device 12 is imaged by the imaging camera 61. The control device 74 analyzes the imaged two-dimensional code Q2 and detects location information of the lid body opening/closing device 12 contained in the two-dimensional code Q2. The control device 74 receives the location information of the lid body opening/closing device 12 previously linked to the above-described ID via the communication device 73. When the two-dimensional code Q2 containing the location information matching the location information of the lid body opening/closing device 12 linked to the above-described ID is imaged, the control device 74 stops the automatic guided vehicle 10 at the position at this time, i.e., the position of the lid body opening/closing device 12 designated as a destination to which the case CS is transferred, as shown in the example of FIG. 13 (S112). At this time, the automatic guided vehicle 10 has a posture in which the distal end of the arm 42 on which each first claw device 51 is provided faces the lid body opening/closing device 12 side according to a direction change at the time of a change in a path of the first travel line 15A → the second travel line 15B → the third travel line 15C.

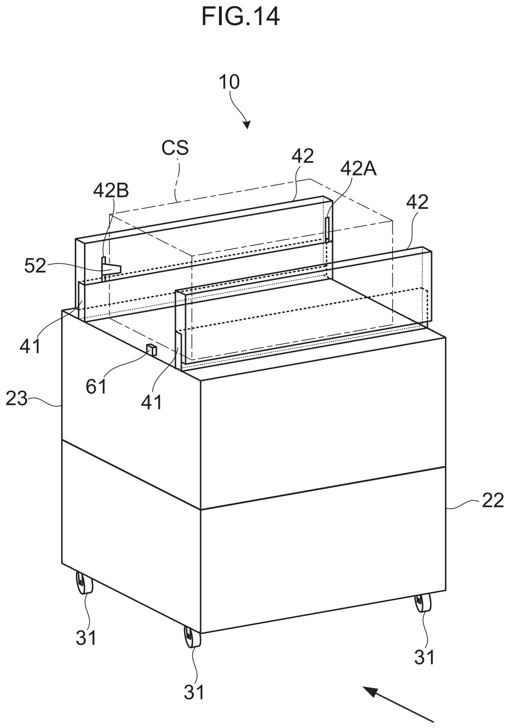

Here, the control device 64 controls the driving of each claw drive motor 56 so that the second claw device 52 on the inner side of the rear end of each arm 42 is projected as shown in FIG. 14 (S113). At this time, the second claw device 52 on the inner side of the rear end of each arm 42 is located on the end side of the case CS that is the opposite side of the lid body opening/closing device 12.

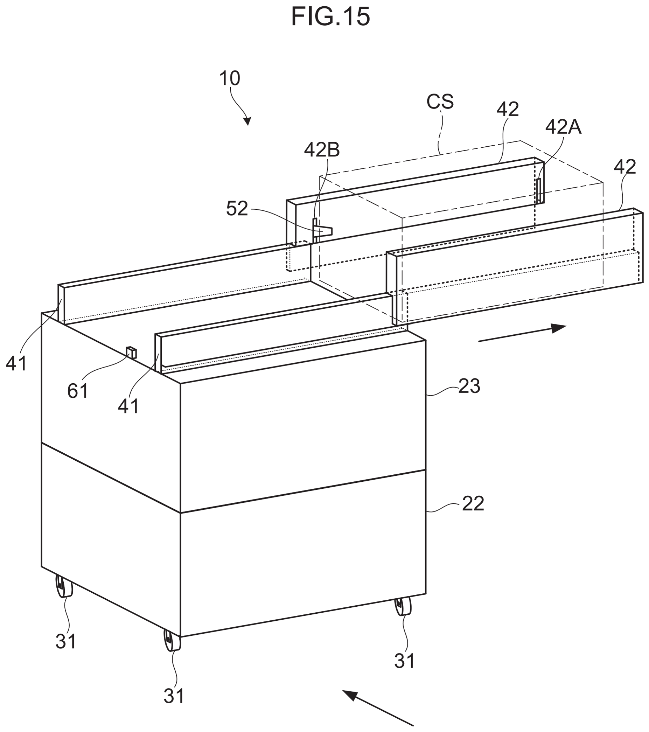

Subsequently, the control device 64 controls the driving of each arm drive motor 45 so that each arm 42 is projected toward the lid body opening/closing device 12 side as shown in FIG. 15 (S114). An amount of projection at this time is set to an amount for allowing the second claw device 52 on the inner side of the rear end of each arm 42 to enter at least a position above the lid body opening/closing device 12. The slide rail 43 has a configuration in which the second rail is engaged and supported by the first rail, the second rail is guided in a movement direction according to the first rail, and the second rail also moves in the outward direction toward the lid body opening/closing device 12 side (a direction opposite to the outward direction toward the first conveyor 11A side shown in FIG. 3).

By projecting each of the arms 42 toward the lid body opening/closing device 12 side, each of the second claw devices 52 is hooked on the case CS, the arms 42 and the second claw device 52 push the case CS from above the working device 23 of the automatic guided vehicle 10 into the lid body opening/closing device 12, and the case CS is moved from above the working device 23 of the automatic guided vehicle 10 into the lid body opening/closing device 12. Subsequently, the control device 64 controls the driving of each of the claw drive motors 56 so that each of the second claw devices 52 is retracted and each of the second claw devices 52 is stored in the arm 42.

When a process (to be described below) for the case CS in the lid body opening/closing device 12 is completed, the control device 64 controls the driving of each arm drive motor 45 so that each arm 42 is projected toward the lid body opening/closing device 12. At this time, the case CS located on the lid body opening/closing device 12 side is sandwiched between the arms 42.

In this state, the control device 64 controls the driving of each claw drive motor 55 so that the first claw device 51 on the inner side of the distal end of each arm 42 is projected and further controls the driving of each arm drive motor 45 so that each arm 42 is retracted from the lid body opening/closing device 12 and moved onto the working device 23. At this time, each first claw device 51 is hooked on the case CS and the case CS moves from the lid body opening/closing device 12 onto the working device 23 of the automatic guided vehicle 10 together with the movement of each arm 42 onto the working device 23.

The control device 64 detects a position of the travel line 15 on the basis of the detection output of the travel line sensor 62, controls the driving of the travel drive motors 33 of the drive wheels 32 according to the detected position of the travel line 15 so that the automatic guided vehicle 10 is allowed to travel along the path of the third travel line 15C → the fourth travel line 15D → the first travel line 15A, and stops the travel drive motors 33 of the drive wheels 32 a certain time after the automatic guided vehicle 10 changes its travel direction by 90 degrees between the fourth travel line 15D and the first travel line 15A, and stops the automatic guided vehicle 10 at the waiting position HP (S115).

As described above, if the first conveyor 11A starts the transportation of the case CS, the automatic guided vehicle 10 travels along the first travel line 15A in parallel to the first conveyor 11A, and one of the arms 42 located on the upstream side in the above-described transport direction is projected. At this time, the travel speed V of the automatic guided vehicle 10 is set to a travel speed VA faster than the transport speed VC of the case CS. If one arm 42 moves to the position of the case CS, the other arm 42 located on the downstream side in the transport direction is projected. Also, the case CS is sandwiched between the arms 42. In this state, the first claw device 51 on the inner side of the distal end of each arm 42 is projected, and each arm 42 is pulled back to the automatic guided vehicle 10. At this time, each of the first claw devices 51 is hooked on the case CS, and the case CS is pushed from the first conveyor 11A to the working device 23 of the automatic guided vehicle 10 by the arm 42 and the first claw devices 51, and moves onto the working device 23 of the automatic guided vehicle 10. Thereby, according to the present embodiment, while the automatic guided vehicle 10 is allowed to travel, the case CS being transported by the first conveyor 11A can be transferred to the automatic guided vehicle 10, and the case CS can be moved efficiently.

As the above-described embodiment, an embodiment in which the automatic guided vehicle 10 takes in the case CS transported on the conveyor device 11 and stores the case CS in the lid body opening/closing device 12 has been described. However, in addition to this, the control device 74 may control the driving of the travel drive motor 33, the arm drive motor 45, and the claw drive motor 55 and the claw drive motor 56 so that the arm 42, the first claw device 51, the second claw device 52, and the imaging camera 61 described above are operated and therefore the automatic guided vehicle 10 takes in the case CS from the lid body opening/closing device 12 to place the case CS onto the automatic guided vehicle 10, transports the case CS to the position of the conveyor device 11, and moves the case CS from the automatic guided vehicle 10 onto the conveyor device 11.

Next, a configuration and operation of the lid body opening/closing device 12 of the present embodiment will be described.

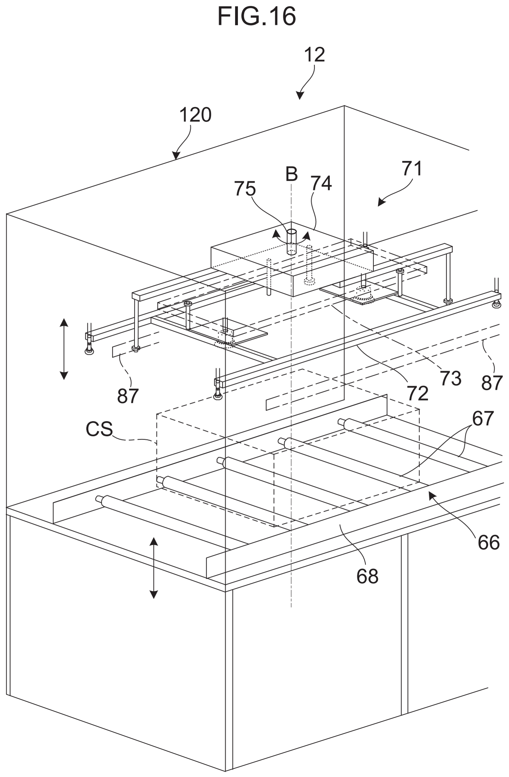

FIG. 16 is a perspective view schematically showing a configuration of the lid body opening/closing device 12 of the present embodiment. The lid body opening/closing device 12 includes a mechanism for taking in the case CS from the automatic guided vehicle 10, opening and closing a lid portion of the case CS, and further taking out stored objects from inside the case CS.

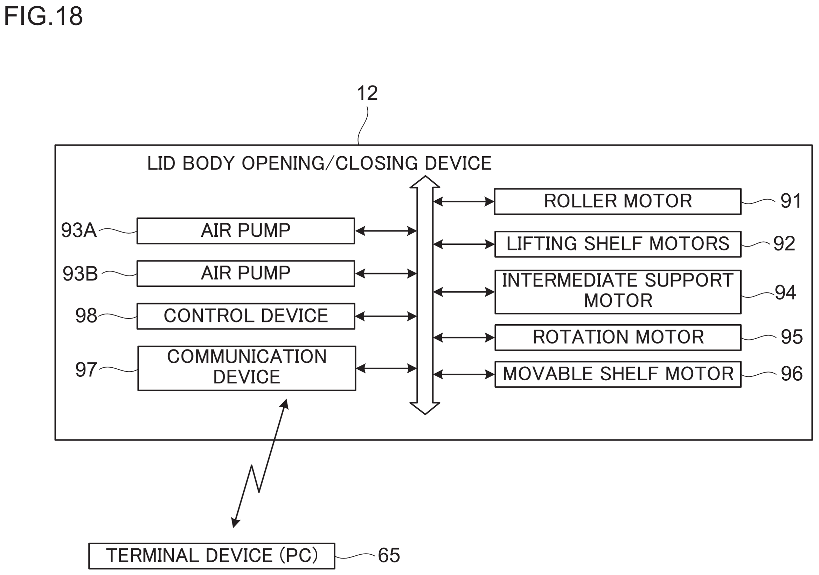

As shown in FIG. 16, in the lid body opening/closing device 12, a lifting shelf 66 is provided below the inner side of the device body 120 and a rotation unit 71 is provided on an upper part of the device body 120. The lifting shelf 66 includes a plurality of rollers 67 and side walls 68 that support the shafts of the rollers 67. The lifting shelf 66 is raised and lowered in the vertical direction by a lifting mechanism (not shown). The lifting mechanism supports the lifting shelf 66 by each vertically extending post that constitutes the device body 120 so that the lifting shelf 66 can move freely in the vertical direction. The lifting mechanism raises and lowers the lifting shelf 66 with a ball screw (a known mechanism) and a motor provided on each post under the control of a control device 98 (FIG. 18).

The ball screw includes a screw shaft that extends vertically from the bottom of the device body 120 of the lid body opening/closing device 12 and is supported rotatably, and a nut that is fixed to the lifting shelf 66 and screwed onto the screw shaft. Lifting shelf motors 92 (FIG. 18) that rotate the screw shafts are provided on the bottom of the device body 120. The control device 98 rotates the screw shafts in one direction using the lifting shelf motors 92, thereby raising the nuts and the lifting shelf 66. The control device 98 also rotates the screw shafts in a direction opposite to the one direction using the lifting shelf motors 92, thereby lowering the respective nuts and the lifting shelf 66.

The case CS is transferred from the automatic guided vehicle 10 to the lifting shelf 66 as described above. During this transfer, each roller 67 rotates with the rotational driving force from the roller motor 91 (FIG. 18), and this rotation moves the case CS on each roller 67 within the lifting shelf 66. When the rollers 67 rotate and the case CS moves on each roller 67, the case CS abuts a stopper (not shown) provided at an end of the device body 120 in the transport direction of the case CS (an end on the side opposite to the automatic guided vehicle 10 side). Thereby, the case CS is positioned at a working position on the lifting shelf 66 below the rotation unit 71.

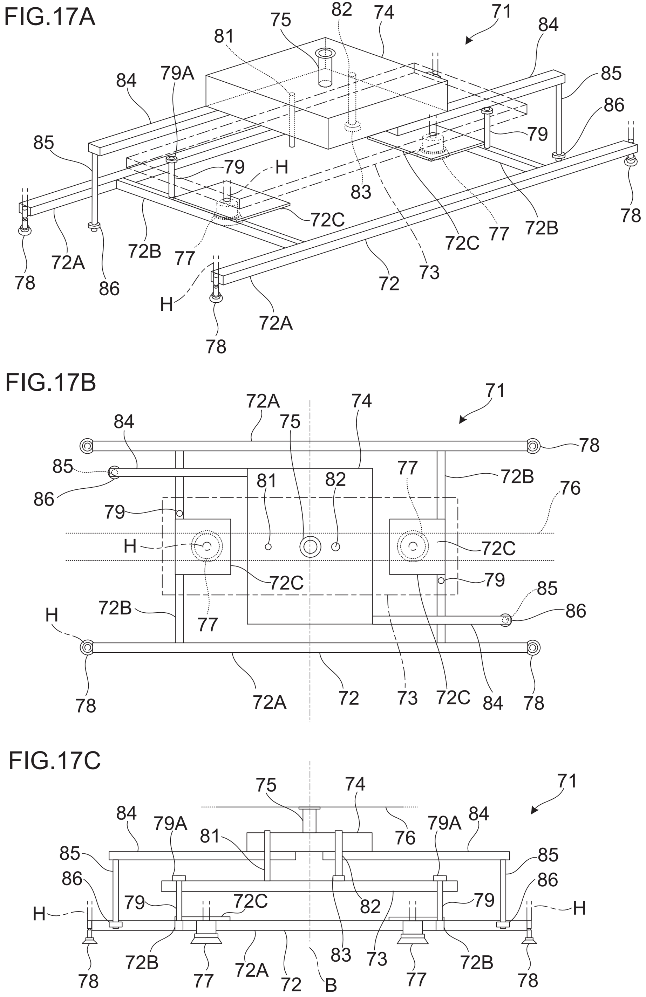

The rotation unit 71 is a mechanism that opens and closes the cover of the case CS and further removes the stored objects from inside the case CS. The rotation unit 71 has a three-stage structure, and includes a lifting and rotation drive device 74 on a first stage from the top, an intermediate support 73 on a second stage, and a ladder frame 72 on a third stage. The support shaft 75 of the lifting and rotation drive device 74 is pivotably supported on a ceiling or beam 76 (FIG. 17C) of the device body 120 of the lid body opening/closing device 12 and supports the rotation unit 71 in a state in which it is suspended from the ceiling or beam 76.

FIG. 17A is a perspective view showing the rotation unit 71, FIG. 17B is a plan view showing the rotation unit 71, and FIG. 17C is a side view showing the rotation unit 71. As shown in FIGS. 17A, 17B, and 17C, the ladder frame 72 is formed by connecting two parallel frame members 72A with two frame members 72B that are perpendicular to the frame members 72A. A support plate 72C is fixed to the center of each frame member 72B in the longitudinal direction. A lid suction pad 77 is attached to a lower surface of each support plate 72C. Moreover, stored object suction pads 78 are attached to both ends of each frame member 72A in the longitudinal direction. The two lid suction pads 77 and the four stored object suction pads 78 are all air suction pads, and a hose H for suctioning air is connected to generate a suction force with negative pressure. In addition, the configuration of the suction pads employed as the lid suction pads 77 and the stored object suction pads 78 is not limited to the above configuration.

Moreover, guide posts 79 are projected and provided on the frame members 72B of the ladder frame 72 and each guide post 79 penetrates the intermediate support 73. The intermediate support 73 is a member that supports the ladder frame 72 and is made of, for example, a flat plate-shaped member. Each guide post 79 is held by the intermediate support 73 so that it is movable in an up-down direction within the intermediate support 73. Thereby, the ladder frame 72 moves in a direction in which it moves toward or away from the intermediate support 73 (the up-down direction). Here, two guide posts 79 are shown, but four guide posts 79 may be provided and the four guide posts 79 may be held so that it is movable in the up-down direction within the intermediate support 73.

Each guide post 79 is guided for movement in the vertical direction by the intermediate support 73 and the ladder frame 72 descends together with the ladder frame 72 due to its own weight. A stopper 79A is provided at the upper end of each guide post 79. The guide support 79 is supported by the intermediate support 73, but passes through a hole for penetration of the guide support 79 formed in the intermediate support 73 in a loose fit state. The stopper 79A has a larger diameter than the hole, and restricts the downward movement of the post 79 relative to the intermediate support 73. The post 79 moves downward relative to the intermediate support 73 and the stopper 79A abuts against and engages with the intermediate support 73 and stops the descent of the ladder frame 72 relative to the intermediate support 73. In other words, when the lid suction pad 77 is not being pushed from below, the stopper 79A engages with the intermediate support 73 and the position of the ladder frame 72 relative to the intermediate support 73 becomes a lowest position.

Moreover, a guide post 81 extending upward is projected and provided on the intermediate support 73. The guide post 81 penetrates the lifting and rotation drive device 74 so that it can be movably held by the lifting and rotation drive device 74 in the up-down direction. Thereby, the intermediate support 73 moves in a direction in which it moves toward or away from the lifting and rotation drive device 74 (in the up-down direction). Although one guide post 81 is shown here, two guide posts 81 may be provided and the two guide posts 81 may be configured to be movably held in the up-down direction with respect to the lifting and rotation drive device 74.

The intermediate support 73 is raised and lowered by a ball screw (a known mechanism). The ball screw includes a screw shaft 82 rotatably supported on the lifting and rotation drive device 74 side and a nut 83 fixed to the intermediate support 73 and screwed onto the screw shaft 82. An intermediate support motor 94 (FIG. 18) for rotating the screw shaft 82 is provided on the lifting and rotation drive device 74. A configuration in which the screw shaft 82 is rotated in one direction by the intermediate support motor 94, and therefore the nut 83 and the intermediate support 73 are raised is adopted. Moreover, the screw shaft 82 is rotated in a direction opposite to the one direction by the intermediate support motor 94, and therefore the nut 83 and the intermediate support 73 are lowered.

For example, in a state in which the stoppers 79A at the upper ends of the guide posts 79 abut the intermediate support 73 and the descent of the ladder frame 72 is stopped, the ladder frame 72 is raised and lowered together with the intermediate support 73.

Therefore, both the intermediate support 73 and the ladder frame 72 are raised and lowered by moving in a direction toward and away from the lifting and rotation drive device 74.

The support shaft 75 of the lifting and rotation drive device 74 is fixed to the ceiling or beam 76 of the device body 120 of the lid body opening/closing device 12 as described above. Moreover, the lifting and rotation drive device 74 is supported rotatably around the support shaft 75 and rotates together with the support shaft 75. For example, a first spur gear is fixed to concentrically rotate together with the support shaft 75 and a second spur gear is fixed to rotate together with the output shaft of a rotation motor 95 (FIG. 18) provided in the lifting and rotation drive device 74. The first and second spur gears are meshed with each other and the second spur gear is rotated by the rotation motor 95 to rotate the lifting and rotation drive device 74 together with the first spur gear and the support shaft 75.

The lifting and rotation drive device 74 is connected to the intermediate support 73 via a ball screw consisting of the guide post 81, the screw shaft 82, and the nut 83 as described above. Moreover, the intermediate support 73 is connected to the ladder frame 72 via each guide post 79. Therefore, when the lifting and rotation drive device 74 rotates, the intermediate support 73 and the ladder frame 72 also rotate accordingly. Thus, the entire rotation unit 71 rotates around the support shaft 75.

The center of rotation of the support shaft 75 coincides with the virtual vertical line B, and the rotation unit 71 rotates around a virtual vertical line B. The virtual vertical line B passes through the center in a width direction and a length direction of the case CS that has been moved to the above-described working position on each roller 67 of the lifting shelf 66.

In the lifting and rotation drive device 74, two frame members 84 extending from the lifting and rotation drive device 74 are provided in parallel to the frame members 72A of the ladder frame 72, as shown in FIG. 17A. Moreover, each frame member 84 is provided at a position offset from the center of the support shaft 75 of the lifting and rotation drive device 74. A rod 85 is provided at the distal end of each frame member 84 on the side opposite to the lifting and rotation drive device 74 side so that the rod 85 extends downward. At the lower end of each rod 85, the abutment roller 86 is provided.

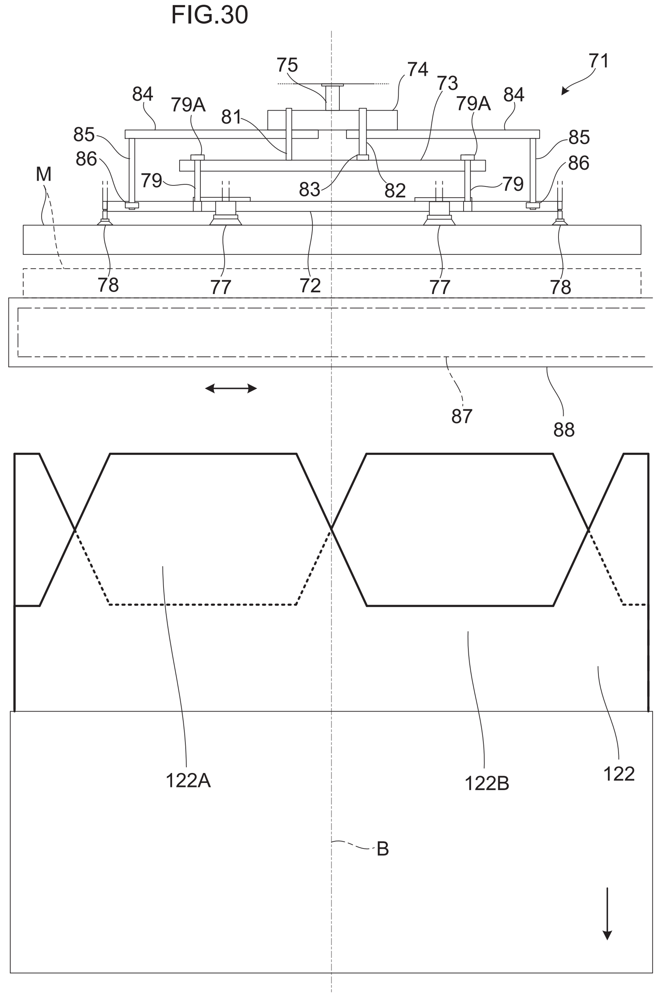

Moreover, as shown in FIG. 16, rails 87 extending in the transport direction of the case CS are provided on the inner walls opposite to each other in the device body 120 of the lid body opening/closing device 12. Each rail 87 is located at a lower position than the rotation unit 71 and guides a movable shelf 88 (FIG. 30), which advances to a position below the rotation unit 71 according to movement in the horizontal direction and retracts from the position below the rotation unit 71, so that the movable shelf 88 is freely moved in the horizontal direction.

For example, each rail 87 includes a plurality of drive wheels (not shown) which are arranged in parallel in the movement direction of the movable shelf 88 and contact the end of the movable shelf 88 in a direction perpendicular to the movement direction. A circumferential surface of each drive wheel rotates in the movement direction of the movable shelf 88. The end of the movable shelf 88 is placed on the circumferential surface. Each drive wheel is rotationally driven in one direction by a movable shelf motor 96 (FIG. 18) and the movable shelf 88 is transported by the circumferential surface of the drive wheel, such that the movable shelf 88 is moved by each drive wheel and the movable shelf 88 advances to a position below the rotation unit 71. Each drive wheel is rotationally driven in a direction opposite to the one direction by the movable shelf motor 96, such that the movable shelf 88 retracts from the position below the rotation unit 71.

The movable shelf 88 is provided in the device body 120 of the lid body opening/closing device 12 and is configured to be movable between a position on each rail 87 and an outer position projecting outside of the device body 120 serving as the side of the device body 120 of the lid body opening/closing device 12. In a state in which the movable shelf 88 has been moved to the outer position, one end of the movable shelf 88 is engaged with and fixed to the device body 120 and the unfixed portion of the movable shelf 88 is projected outside of the device body 120.

FIG. 18 is a block diagram showing a control system for the lid body opening/closing device 12 of the present embodiment. As shown in FIG. 18, the lid body opening/closing device 12 includes a roller motor 91 configured to supply a rotational driving force for rotating each roller 67 of the lifting shelf 66, each lifting shelf motor 92 of the lifting mechanism configured to supply a driving force for raising and lowering the lifting shelf 66, an air pump 93A configured to suction air from the hose H of each lid suction pad 77, an air pump 93B configured to suction air from the hose H of each stored object suction pad 78, an intermediate support motor 94 of the lifting and rotation drive device 74 configured to raise and lower the intermediate support 73, a rotation motor 95 of the lifting and rotation drive device 74 configured to rotate the rotation unit 71 around the support shaft 75, a movable shelf motor 96 configured to supply a driving force for moving the movable shelf 88, a communication device 97, and a control device 98.

The communication device 97 is a communication interface that includes a communication module such as a LAN chip (not shown), and is connected to the terminal device 65 via a wired or wireless LAN to transmit and receive data to and from the terminal device 65.

The control device 98 is configured to include a processor, a random-access memory (RAM), a read only memory (ROM), and a dedicated hardware circuit. The processor is, for example, a central processing unit (CPU), an application-specific integrated circuit (ASIC), a micro processing unit (MPU), or the like. The control device 98 integrally controls the functions of the lid body opening/closing device 12 according to the operation of the processor in accordance with a control program stored in the ROM.

The control device 98 controls the driving of the roller motor 91 so that each roller 67 of the lifting shelf 66 is rotated and controls the driving of each lifting shelf motor 92 so that the lifting shelf 66 is raised and lowered. Moreover, the control device 98 also controls the driving of the air pump 93A or 93B so that the adsorption of each lid suction pad 77 or each stored object suction pad 78 is turned on and off. Furthermore, the control device 98 controls the driving of the intermediate support motor 94 so that the intermediate support 73 is raised and lowered, controls the driving of the rotation motor 95 so that the rotation unit 71 is rotated together with the support shaft 75, and controls the driving of the movable shelf motor 96 so that the movable shelf 88 is moved.

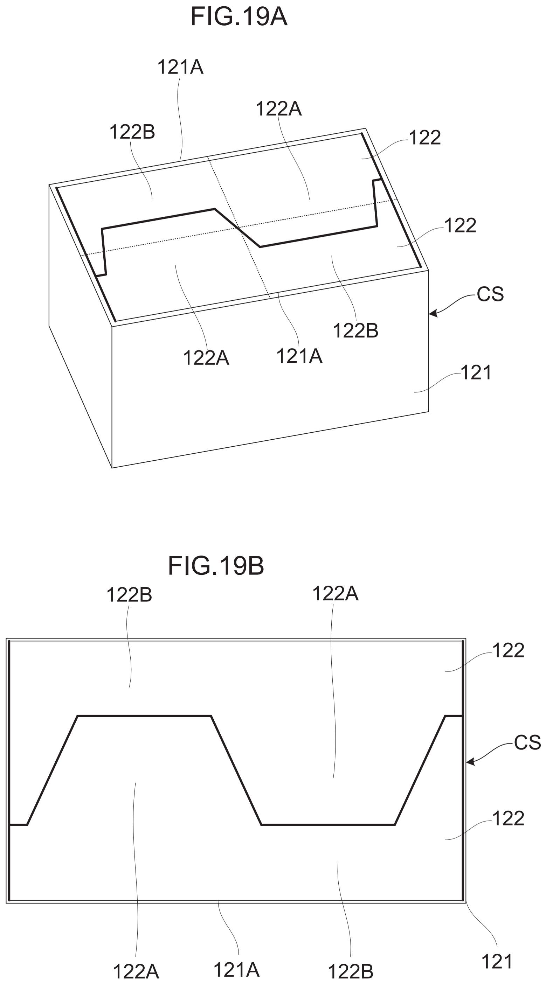

FIG. 19A is a perspective view showing the case CS and FIG. 19B is a plan view showing the case CS. As shown in FIGS. 19A and 19B, the case CS includes a hollow rectangular parallelepiped main body 121 having an opening, and two lid bodies 122. The above-described opening is rectangular when the case CS is seen from above. The lid bodies 122 are provided on two edges opposite to each other among the four edges of the main body 121 forming the above-described opening and open and close the opening. That is, the lid bodies 122 are pivotally supported on one side 121 of the two edges forming the opening of the main body 121 so that the lid bodies 122 are freely opened and closed. The lid body 122 has a wide portion 122A whose width to an end opposite the side where it is pivotally supported on the one side 121A is wide and a narrow portion 122B has a narrower width than the wide portion 122A.

One of the lid body edges of each lid body 122 is rotatably supported on the edge of the main body 121. The wide portion 122A has a predetermined large dimension in a width direction perpendicular to a direction in which one of the lid body edges extends. The wide portion 122A has a predetermined small dimension smaller than the large dimension.

When each lid body 122 shown in FIG. 19A is in a state in which the above-described opening is closed, the wide portion 122A of one lid body 122 comes into contact with the narrow portion 122B of the other lid body 122 and the narrow portion 122B of the one lid body 122 comes into contact with the wide portion 122A of the other lid body 122, such that the opening of the main body 121 is covered.

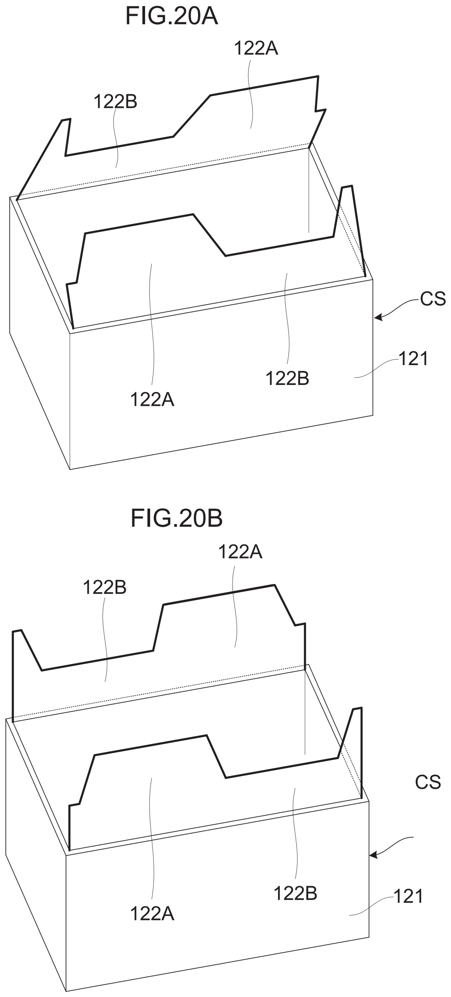

FIG. 20A shows a state in which a process of opening each lid body 122 of the case CS is in progress and FIG. 20B is a perspective view showing a state in which each lid body 122 of the case CS is opened. As shown in FIGS. 20A and 20B, in the state in which the process of opening each lid body 122 is in progress and the state in which each lid body 122 is opened, the wide portion 122A of each lid body is projected upward and the narrow portion 122B of each lid body is recessed downward, i.e., an amount of upward projection is less than that of the wide portion 122A.

In the lid body opening/closing device 12 configured as described above, when the case CS moves from the automatic guided vehicle 10 onto the rollers 67 of the lifting shelf 66, the rollers 67 are rotated and the case CS is moved and positioned at the above-described working position below the rotation unit 71. In this state, a process in which the lifting shelf 66 is raised and lowered, a process in which the lid suction pads 77 of the rotation unit 71 adsorb the lid bodies 122, a rotation process of the rotation unit 71, and the like are performed in a preset order and the lid bodies 122 are open. Also, a process in which the lifting shelf 66 is raised and lowered, a process in which the stored object suction pads 78 of the rotation unit 71 adsorb the stored objects within the case CS, a process in which the movable shelf 88 advances and retracts, and the like are performed in a preset order and the stored objects of the case CS are removed. Furthermore, a process in which the lifting shelf 66 is raised and lowered, a rotation process of the rotation unit 71, and the like are performed in a preset order and the lid bodies 122 are closed. Subsequently, the case CS is transferred from the rollers 67 of the lifting shelf 66 to the automatic guided vehicle 10.

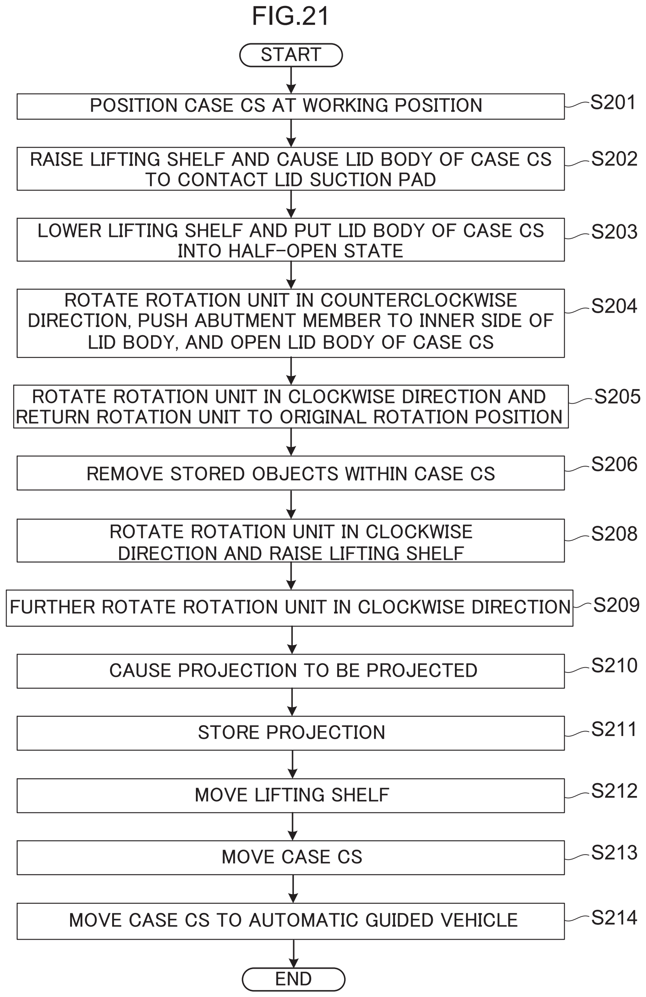

Next, a control procedure for performing a process in which the lid body opening/closing device 12 opens and closes the lid bodies 122 of the case CS as described above and the like will be described in detail with reference to a flowchart shown in FIG. 21.

When the case CS is transferred from the automatic guided vehicle 10 onto the rollers 67 of the lifting shelf 66, the case CS transported onto the rollers 67 is detected, for example, by a position detection sensor (such as an optical sensor) provided in the lid body opening/closing device 12. When the control device 98 receives this detection signal from the position detection sensor, the control device 98 starts the operation of the lid body opening/closing device 12. Alternatively, when the case CS is transferred from the automatic guided vehicle 10 onto the rollers 67 of the lifting shelf 66, the user may operate the terminal device 65 to transmit a start instruction to start the operation of the lid body opening/closing device 12 to the lid body opening/closing device 12 and the control device 98 may start the operation of the lid body opening/closing device 12 in accordance with this start instruction.

In the lid body opening/closing device 12, when the detection signal or start instruction is received by the communication device 97, the control device 98 controls the driving of the roller motor 91 so that the rollers 67 are rotated in accordance with the detection signal or start instruction, and the case CS is moved and positioned at the working position (S201). In addition, the lid body opening/closing device 12 may not include the roller motor 91, and each roller 67 may only rotate due to friction with the case CS and the case CS may be transported to the above-described working position by the operation of each arm 42 of the automatic guided vehicle 10.

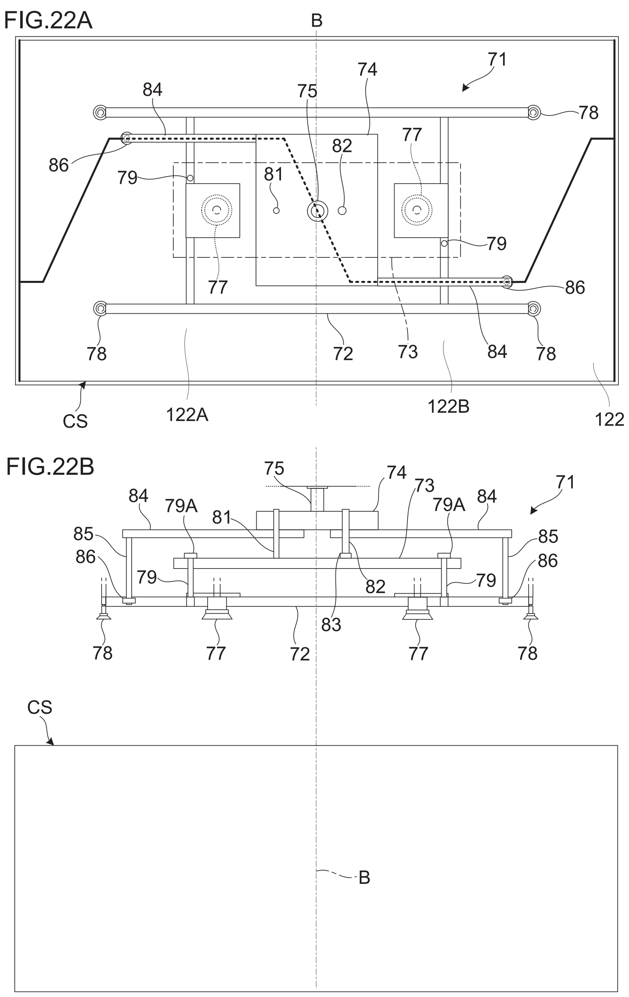

Thereby, as shown in FIGS. 22A and 22B, the rotation unit 71 is positioned above the case CS, and the above-described center of the case CS is positioned on an extension line of the support shaft 75 of the rotation unit 71. Moreover, each lid suction pad 77 of the ladder frame 72 is positioned above the wide portion 122A of each lid body 122 of the case CS. Each abutment roller 86 of the lifting and rotation drive device 74 is positioned above the case CS, near a boundary between the wide portion 122A of the one lid body 122 and the narrow portion 122B of the other lid body 122, and further near a boundary between the wide portion 122A of the other lid body 122 and the narrow portion 122B of the one lid body 122.

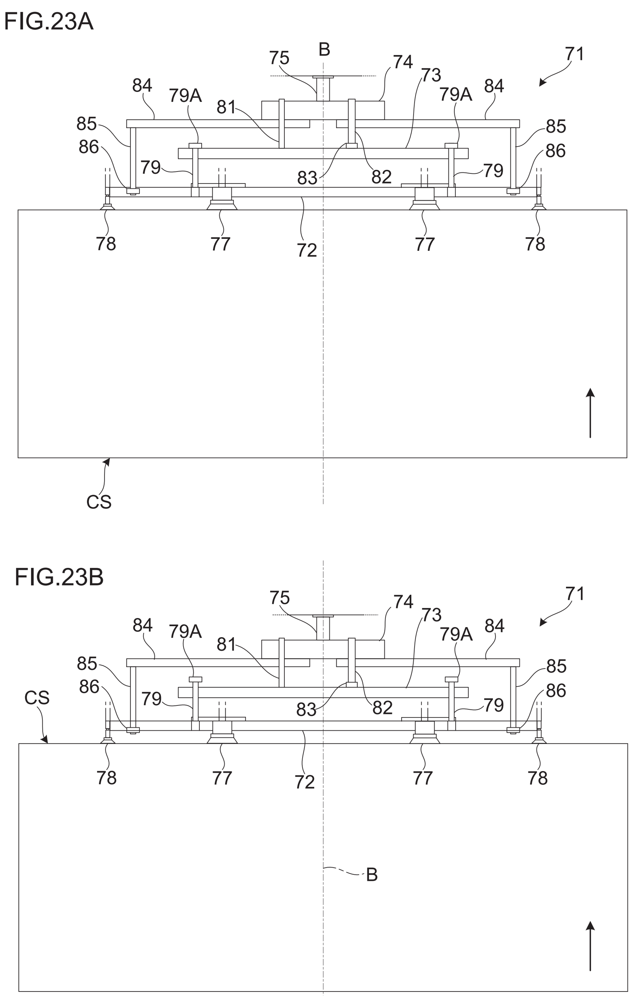

The control device 98 controls the driving of each lifting shelf motor 92 of the lifting shelf 66 so that the lifting shelf 66 is raised. Thereby, as shown in FIG. 23A, each lid body 122 of the case CS comes into contact with each lid suction pad 77 of the ladder frame 72, and the ladder frame 72 is slightly raised by each lid body 122 of the case CS. Thereby, the ladder frame 72 is raised to move toward the intermediate support 73, as shown in FIG. 23B. At this time, as is clear from FIG. 22A, the wide portion 122A of each lid body 122 of the case CS comes into contact with each lid suction pad 77.

The control device 98 calculates a lifting distance, which is a sum of a distance of the lifting shelf 66 until each lid body 122 of the case CS comes into contact with each lid suction pad 77 of the ladder frame 72 and a distance (default value) by which each lid body 122 pushes up each lid suction pad 77, from a distance from each roller 67 of the lifting shelf 66 before the raising process to each lid suction pad 77 of the ladder frame 72 and a height of each lid body 122 of the case CS. The control device 98 rotates the lifting shelf motor 92 of the lifting shelf 66 to raise the lifting shelf 66 by the above-described lifting distance, and causes the wide portions 122A of the lid bodies 122 of the case CS to come into contact with the lid suction pads 77 of the ladder frames 72 (S202).

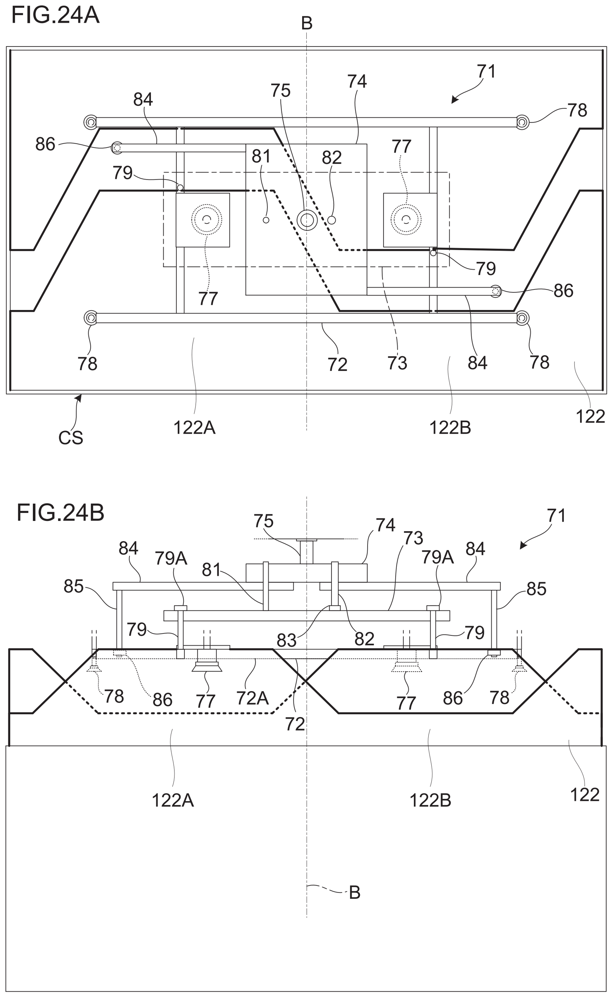

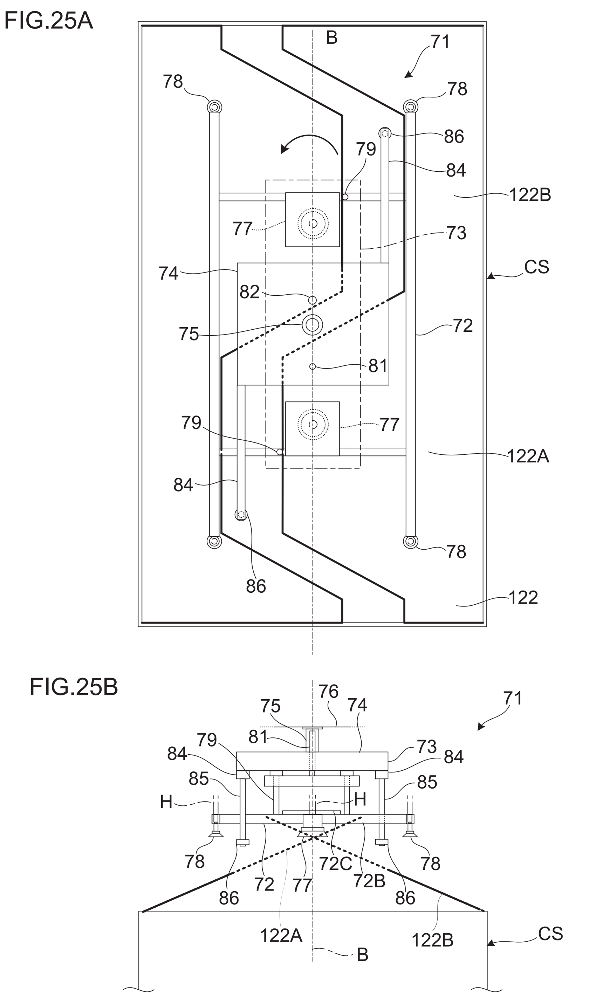

At a timing when the wide portions 122A of the lid bodies 122 of the case CS has come into contact with the lid suction pads 77 of the ladder frames 72 (a timing when the lifting shelf 66 has been raised by the above-described lifting distance), the control device 98 controls the driving of the air pump 93A so that the lid bodies 122 are adsorbed to the lid suction pads 77. Also, the control device 98 controls the driving of the lifting shelf motor 92 of the lifting shelf 66 so that the lifting shelf 66 is lowered by a predetermined certain distance (S203). Thereby, as shown in FIGS. 24A and 24B, the wide portion 122A of each lid body 122 of the case CS is raised by each lid suction pad 77 of the ladder frame 72, and each lid body 122 of the case CS is in a half-open state. At this time, as shown in FIGS. 25A and 25B, neither the wide portion 122A nor the narrow portion 122B of each lid body 122 interferes with the abutment roller 86 at the lower end of each rod 85 of the lifting and rotation drive device 74, and the half-open state is achieved. That is, mounting positions and mounting postures of the two frame members 84 relative to the lifting and rotation drive device 74, mounting positions of the rods 85 relative to the frame members 84, and further lengths of the rods 85 (positions of the abutment rollers 86 from the frame members 84) are set so that contact with each lid body 122 is not made when the lid bodies 122 are in the half-open state. When each lid body 122 is in the half-open state, the abutment roller 86 at the lower end of each rod 85 is located below the uppermost end of the wide portion 122A of each lid body 122 in the half-open state and inside the wide portion 122A.

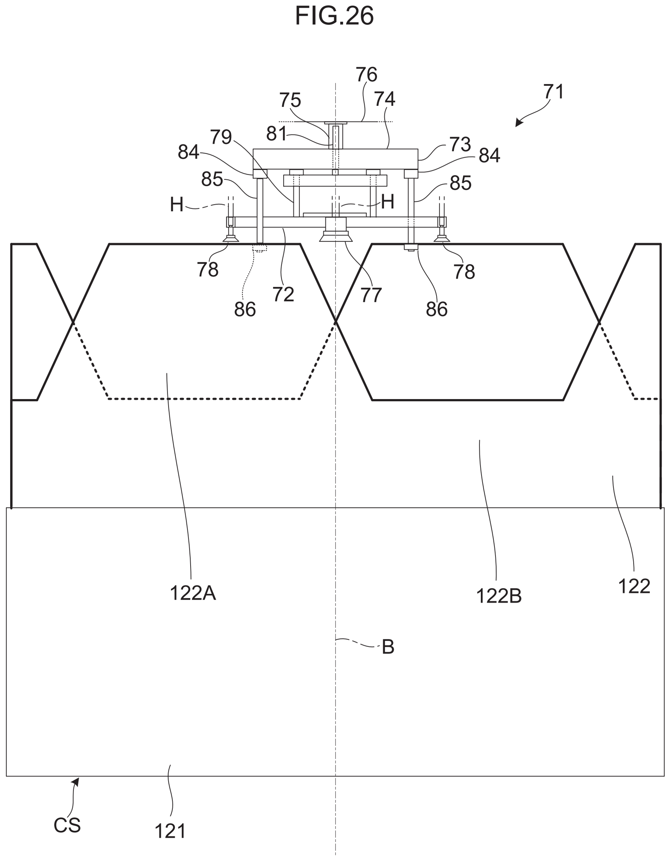

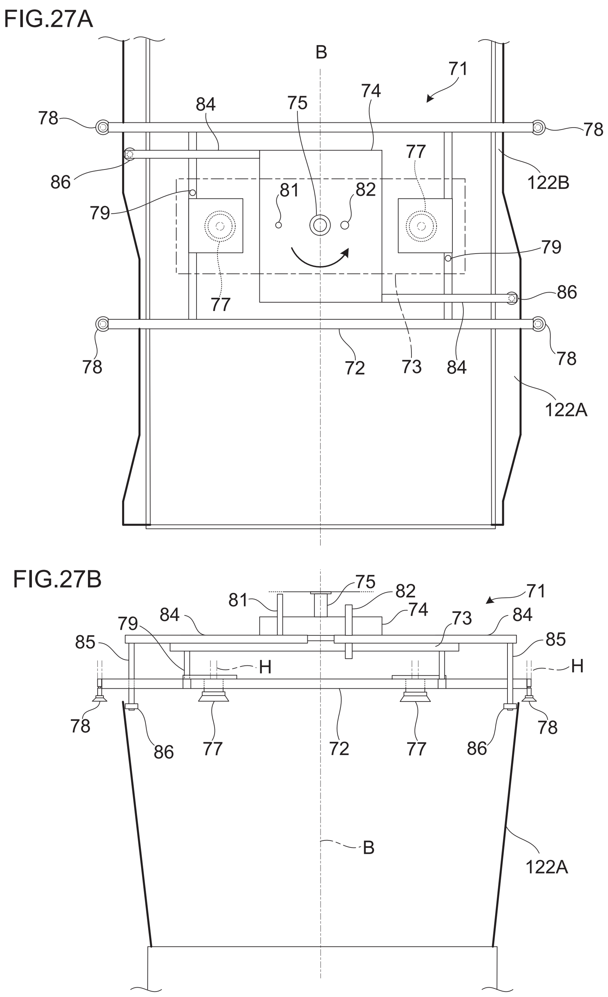

Furthermore, the control device 98 controls the driving of the rotation motor 95 of the lifting and rotation drive device 74 so that a rotation process of the rotation unit 71 in a counterclockwise direction indicated by an arrow around the support shaft 75 is started when the rotation unit 71 is seen from above, as shown in FIG. 25A as an example and the rotation unit 71 is stopped at a position rotated 90° as shown in FIGS. 26, 27A, and 27B (S204). At this time, the abutment roller 86 at the lower end of each rod 85 of the lifting and rotation drive device 74 abuts the inside of the upper end of the wide portion 122A of each lid body 122 and pushes the wide portion 122A from its inside. Thereby, each lid body 122 of the case CS is in a full open state.

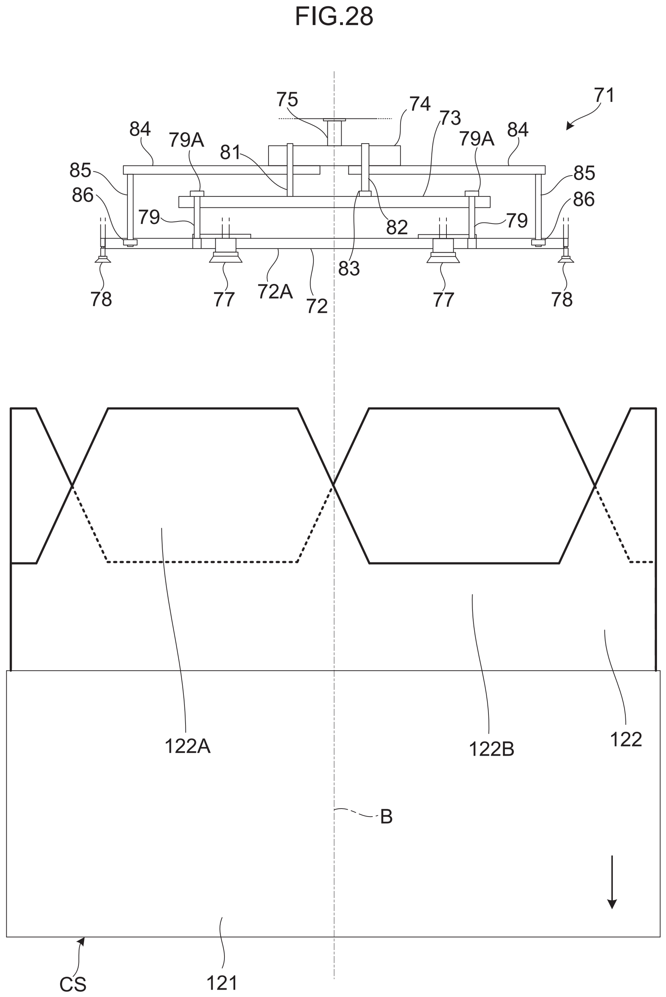

After each lid body 122 of the case CS is thus opened, the control device 98 stops the operation of the air pump 93A. Thereby, each lid suction pad 77 does not suction the lid body 122. Subsequently, the control device 98 controls the driving of the lifting shelf motor 92 of the lifting shelf 66 so that the lifting shelf 66 is further lowered and controls the driving of the rotation motor 95 of the lifting and rotation drive device 74 so that the rotation unit 71 is rotated in the clockwise direction in FIG. 25 and returns to its original rotation position before the counterclockwise rotation as shown in FIG. 28 (S205).

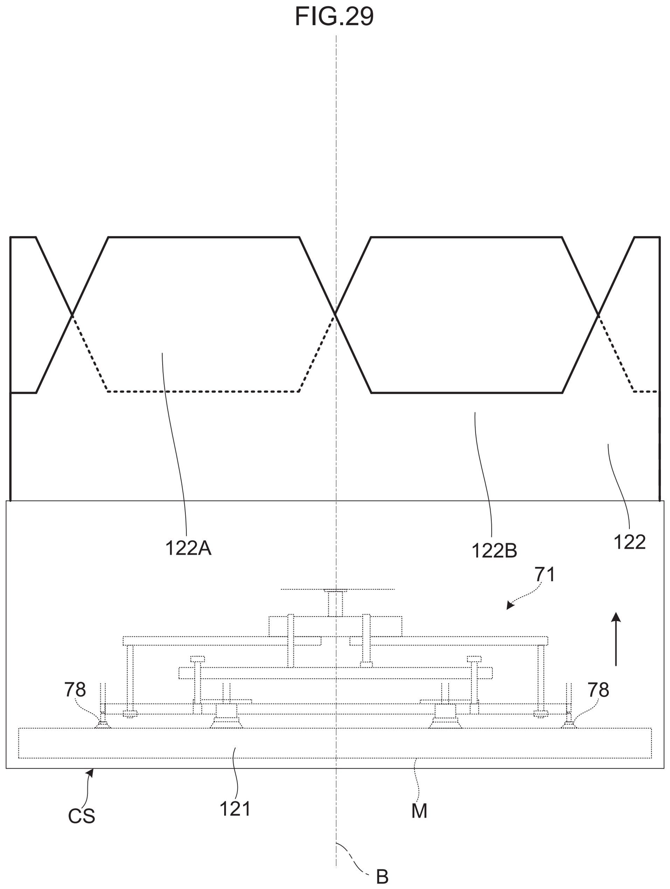

From this state, the control device 98 controls the driving of the lifting shelf motors 92 of the lifting shelf 66 so that the lifting shelf 66 is raised until each storage suction pad 78 of the ladder frame 72 reaches a position where contact with a stored object (e.g., a pallet) M within the case CS is made as shown in FIG. 29. Subsequently, the control device 98 controls the driving of the air pump 93B so that each of the stored object suction pads 78 adsorbs the stored object M. Also, the control device 98 controls the driving of each lifting shelf motor 92 of the lifting shelf 66 so that the lifting shelf 66 is lowered until the stored object M adsorbed by each of the stored object suction pads 78 reaches an upper position outside the case CS, as shown in FIG. 30. Thereby, the rotation unit 71 removes the stored objects M from the case CS.

Furthermore, the control device 98 controls the driving of the movable shelf motor 96 so that the movable shelf 88 advances from the above-described outer position to a position below the rotation unit 71 and controls the driving of the air pump 93B so that the adsorption of the stored objects M by each of the stored object suction pads 78 is released. Thereby, the stored objects M are away from the stored object suction pads 78 and are placed on the movable shelf 88. The control device 98 controls the driving of the movable shelf motor 96 so that the movable shelf 88 is retracted from below the rotation unit 71 together with the stored objects M, the movable shelf 88 is moved to the above-described outer position, and the movable shelf 88 is projected outward from the device body 120 of the lid body opening/closing device 12 (S206). When the movable shelf 88 moves to the above-described outer position, an amount of projection of the movable shelf 88 is set so that the stored objects M placed on the movable shelf 88 move outward from the lid body opening/closing device 12.

When the stored objects M placed on the movable shelf 88 move to a position outside the lid body opening/closing device 12 as the movable shelf 88 moves to the above-described outer position, the stored objects M are mechanically or manually collected at this position. For example, when the stored objects M include a tray and an article placed on the tray, the robot mechanism collects the article from the tray at the above position. At this time, the empty tray after the collection of all articles is lowered by releasing the support of the movable shelf 88 according to the operation of the movable shelf 88 and is stored in a storage box that stores the tray. In other words, multiple empty trays are collected in the storage box.

When there are multiple stored objects M in the case CS, the control device 98 iterates S206. The control device 98 removes the stored objects M one by one and ends S206 when all the stored objects M in the case CS have been removed.

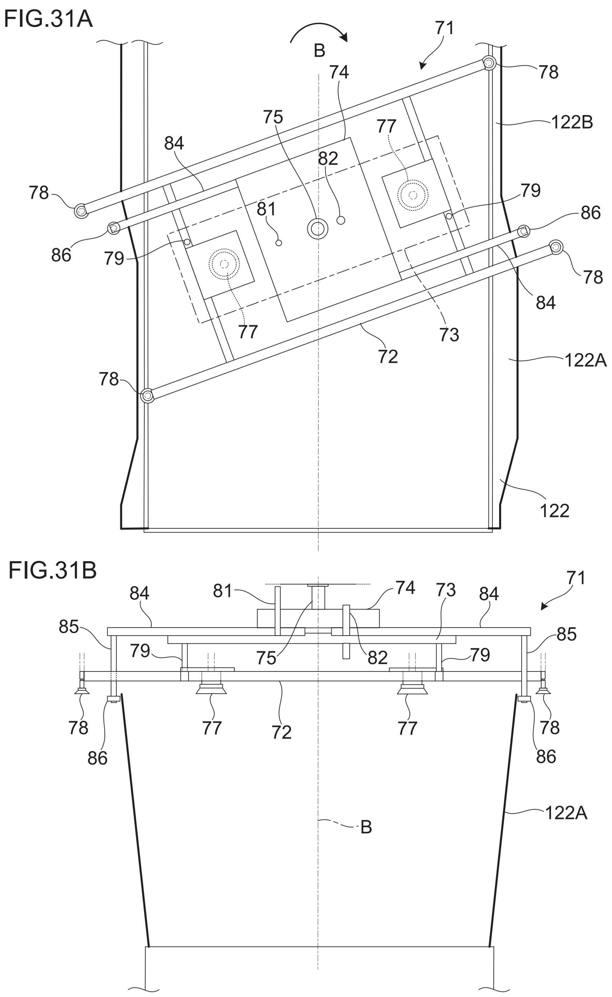

At this time, the rotation unit 71 has a posture similar to that shown in FIG. 25. Here, the control device 98 controls the driving of the rotation motor 95 of the lifting and rotation drive device 74 so that the rotation unit 71 is rotated in a clockwise direction from that posture, and the abutment rollers 86 at the lower ends of the rods 85 of the lifting and rotation drive device 74 are moved to the outer side of each lid body 122 of the case CS as shown in FIG. 31A (S208).

Subsequently, the control device 98 controls the driving of each lifting shelf motor 92 of the lifting shelf 66 to raise the lifting shelf 66, and each lid body 122 of the case CS enters the inner side of the abutment rollers 86 at the lower end of each rod 85 of the lifting and rotation drive device 74 and moves the abutment rollers 86 to a position outside each lid body 122 of the case CS as shown in FIG. 31B (S208).

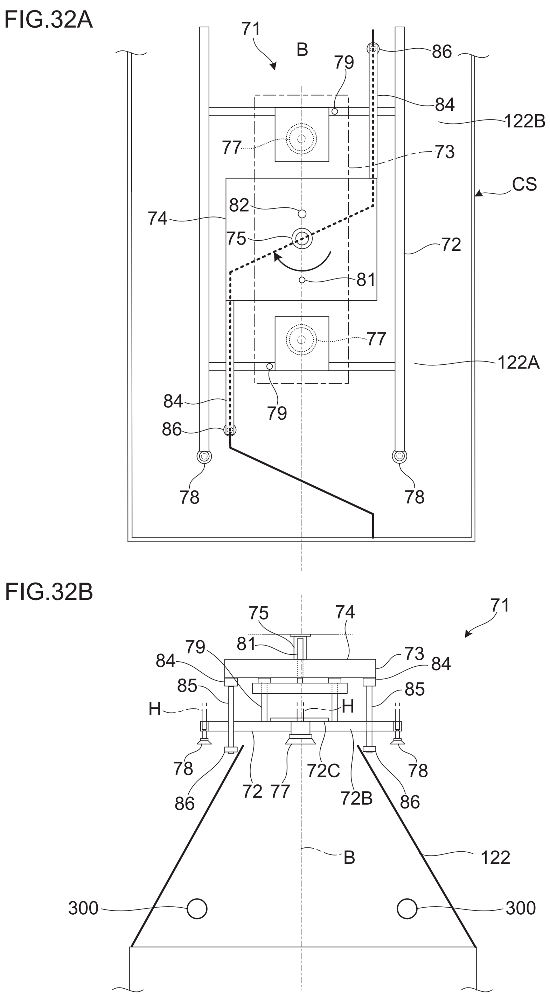

Also, when the rotation unit 71 is in the state shown in FIG. 31B, the control device 98 controls the driving of the rotation motor 95 of the lifting and rotation drive device 74 so that the rotation unit 71 is further rotated in the clockwise direction in FIG. 31B and returns to a posture similar to that of the state shown in FIG. 25 (S209). In a process in which the rotation unit 71 returns to the posture, as shown in FIG. 32B, the abutment rollers 86 at the lower ends of the rods 85 of the lifting and rotation drive device 74 pushes the upper ends of the wide portions 122A of the lid bodies 122 from the outer side thereof. Thereby, the lid bodies 122 start to fall in the closing direction.

Here, a projecting mechanism is provided on a side of the device body 120 of the lid body opening/closing device 12 (a side opposite to the automatic guided vehicle 10 side and a side wall provided on a part of the device body 120 that is in a position that does not interfere with the movement of the movable shelf 88). The projecting mechanism includes a storage device provided on the side wall, a rod-shaped projection 300 that is projected from the storage device when stored in the storage device and reaches a position above the opening of the main body 121 of the case CS, and an actuator (not shown) that causes the projection to perform a projection operation. The control device 98 controls the operation of the actuator. That is, the projection 300 performs the above-described projecting operation with an actuator such as a solenoid controlled by the control device 98. When the lid body 122 is pushed from the outer side of the lid body 122 by the abutment member 86, the control device 98 controls the operation of the actuator so that the projection 300 is projected to a position above the opening portion of the main body 121, for example, at a timing after S209 (S210).

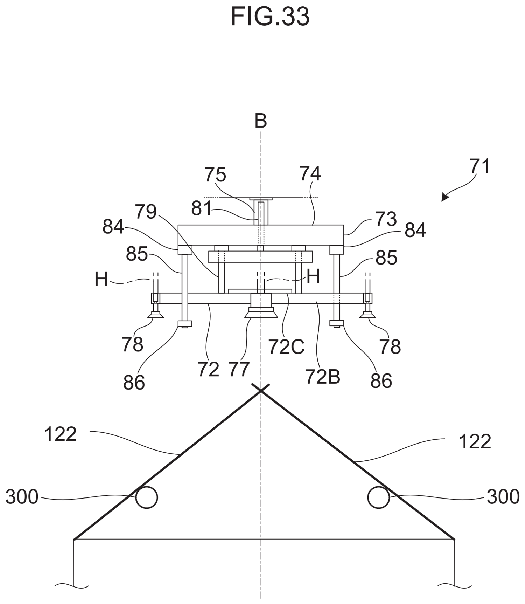

When each lid body 122 begins to be lowered in the closing direction, a part of each lid body 122 is engaged by the projection 300 projected as described above and the movement of each lid body 122 in the closing direction is temporarily stopped as shown in FIG. 33. That is, the projection 300 is provided at a position where a part of each lid body 122 is engaged. At this time, for example, when a predetermined time (a predetermined time required to reach the projection 300 from the processing time of S210 for the wide portion 122A of each lid body 122) has elapsed from the processing time of S210, the control device 98 controls the operation of the actuator so that the projection 300 is moved to a position where it is stored in the above-described storage device (S211). Thereby, the wide portion 122A of each lid body 122 is lowered under its own weight and covers the opening of the main body 121 of the case CS to close the opening, as shown in FIG. 19.

Subsequently, the control device 98 controls the driving of each lifting shelf motor 92 of the lifting shelf 66 so that the lifting shelf 66 is raised and lowered and the lifting shelf 66 is moved to a position where the top of the circumferential surfaces of the multiple rollers 67 is at approximately the same height as the working device 23 of the automatic guided vehicle 10 (S212).

Subsequently, the control device 98 controls the driving of the roller motors 91 that rotate the rollers 67 of the lifting shelf 66 so that the rollers 67 are rotated in a direction opposite to the direction in the case of S201 and the case CS is moved to the automatic guided vehicle 10 side (S213).

In the automatic guided vehicle 10, under the control of the control device 64, the case CS is moved from above the lid body opening/closing device 12 to the automatic guided vehicle 10 side (S214). That is, in the automatic guided vehicle 10, the control device 64 controls the driving of the arm drive motors 45 so that the arms 42 are projected to the lid body opening/closing device 12 side. Thereby, the case CS is located on the lifting shelf 66 between the arms 42. The control device 64 drives each claw drive motor 56 so that the first claw device 51 on the inner side of the distal end of each arm 42 is projected. In this state, the control device 64 controls the driving of each arm drive motor 45 so that each arm 42 is retracted from the lid body opening/closing device 12 onto the working device 23. At this time, each first claw device 51 is hooked on the case CS and the case CS moves together with each arm 42 from the lid body opening/closing device 12 to the working device 23 of the automatic guided vehicle 10. Subsequently, the control device 64 causes the automatic guided vehicle 10 to travel in a predetermined direction.

In this way, in the lid body opening/closing device 12 of the present embodiment, the case CS is transferred from the automatic guided vehicle 10 onto each roller 67 of the lifting shelf 66, and a process of raising and lowering the lifting shelf 66, a process in which the lid suction pads 77 of the ladder frame 72 adsorb the lid bodies 122, a rotation process of the rotation unit 71, and the like are performed in a preset order, and each lid body 122 is open. Also, a process in which the lifting shelf 66 is raised and lowered, a process in which the stored object suction pads 78 of the ladder frame 72 adsorb the stored objects within the case CS, a process in which the movable shelf 88 advances and retracts, and the like are performed in a preset order and the stored objects are removed. Furthermore, a process in which the lifting shelf 66 is raised and lowered, a rotation process of the rotation unit 71, and the like are performed in a preset order, and the lid bodies 122 are closed. Therefore, the above-described mechanisms of the lid body opening/closing device 12 can open and close the lid bodies 122 of the case CS, even with a simple configuration, without the need for an arm robot or the like.

Although the lifting shelf 66 is raised and lowered to cause the case CS on the rollers 67 of the lifting shelf 66 to move toward and away from the rotation unit 71 in the above-described embodiment, a configuration in which the rotation unit 71 is raised and lowered to cause the case CS to move toward and away from the rotation unit 71 may be adopted.

Furthermore, the configurations and processes of the above-described embodiment and modified examples described with reference to FIGS. 1 to 33 are merely examples of the present invention and the present invention is not limited to these configurations and processes.

## Claims

1. A lid body opening/closing device comprising:
a rotation unit provided above a position where a storage housing is placed and configured to move toward or away from the storage housing and rotate around a virtual vertical line passing through the storage housing,
wherein the rotation unit includes
a lid suction pad configured to move toward the storage housing together with the rotation unit so that the lid suction pad is adsorbed to the lid body of the storage housing and to move together with the rotation unit in a direction away from the storage housing to raise and open the lid body; and
an abutment member provided at a position on the rotation unit on an inner side of the lid body raised by the lid suction pad and configured to rotate together with the rotation unit, contact the inner side of the lid body, and push the lid body from the inner side in a direction in which the lid body is opened when the lid suction pad is detached from the lid body.

2. The lid body opening/closing device according to claim 1, comprising a lifting shelf on which the storage housing is placed, the lifting shelf being raised and lowered,
wherein the lifting shelf is raised and lowered to move the rotation unit toward or away from the storage housing.

3. The lid body opening/closing device according to claim 1, wherein, in a state in which the lid suction pad is detached from the lid body and the lid body of the storage housing is open, after the abutment member is moved together with the rotation unit in a direction away from the lid body, the abutment member is rotated together with the rotation unit to position the abutment member on an outer side of the lid body, and the abutment member is rotated together with the rotation unit to push the lid body from the outer side with the abutment member.

4. The lid body opening/closing device according to claim 1,
wherein a projection mechanism is provided on a side of a device body in the device body of the lid body opening/closing device,
wherein the projection mechanism includes
a rod-shaped projection portion projected from the side and reaching a position above an opening formed in an upper part of the storage housing placed at the position; and
an actuator configured to cause the projection to be projected,
wherein the lid body opening/closing device further comprises a control device configured to control an operation of the actuator, and
wherein the control device drives the actuator so that the projection is projected to a position above the opening of the storage housing when the lid body is pushed from the outer side of the lid body by the abutment member.

5. The lid body opening/closing device according to claim 1,
wherein the lid body of the storage housing includes
a hollow main body consisting of a rectangular prism with an opening formed therein; and
a pair of lid bodies provided on two edges opposite to each other among edges of the main body forming the opening in a rectangular shape in top view and configured to open and close the opening,
wherein one edge of the lid body is rotatably supported on the edge of the main body,
wherein each lid body includes
a wide portion having a predetermined large dimension that is a width dimension in a direction orthogonal to a direction in which one edge of the lid body extends; and
a narrow portion having a predetermined small dimension smaller than the large dimension,
wherein the wide portion of one lid body comes into contact with the narrow portion of the other lid body in a state in which the opening is closed, and
wherein the lid suction pad is adsorbed to an outer side of the wide portion of the lid body when the lid suction pad is adsorbed to the lid body.

6. The lid body opening/closing device according to claim 5,
wherein the abutment member abuts an inner side of the wide portion of the lid body when the lid body is pushed from its inner side, and
wherein the abutment member abuts an outer side of the wide portion of the lid body when the lid body is pushed from its outer side.

7. The lid body opening/closing device according to claim 1,
wherein the rotation unit includes a stored object suction pad configured to be adsorbed to a stored object within the storage housing, and
wherein the lid suction pad moves inside the storage housing so that the stored object suction pad is adsorbed to the stored object located within the storage housing in a state in which the lid suction pad moves away from the lid body and the lid body is open and moves outside the storage housing from the storage housing in a state in which the lid suction pad adsorbs the stored object.

8. The lid body opening/closing device according to claim 7, comprising a movable shelf configured to perform horizontal movement between the rotation unit and the open lid body so that input and output processes are free,
wherein, after the stored object suction pad is moved away from a bottom of the storage housing and the stored object is removed, the movable shelf is moved outward from a space between the rotation unit and the open lid body of the storage housing after a process for adsorbing the stored object in the stored object suction pad is released in a state in which the movable shelf is moved between the rotation unit and the open lid body of the storage housing.

9. An automatic guided vehicle system comprising:
the lid body opening/closing device according to any one of claims 1 to 8;
a conveyor configured to load and transport an article; and
an automatic guided vehicle,
wherein the automatic guided vehicle includes
a travel drive device configured to cause the automatic guided vehicle to travel by rotating the drive wheels of the automatic guided vehicle;
a pair of arms provided at positions on the automatic guided vehicle on a downstream side and an upstream side in a direction in which the article is transported by the conveyor when the automatic guided vehicle travels along the conveyor and configured to extend in a direction perpendicular to the direction in which the article is transported, face each other at positions spaced apart by a distance corresponding to a width of the article in the direction in which the article is transported by the conveyor, reciprocate in the perpendicular direction to project outward from the automatic guided vehicle, and retract into the automatic guided vehicle from a projected position;
an arm drive device configured to cause each of the arms to reciprocate in the perpendicular direction;
first claw devices provided on distal-end sides of the pair of arms and configured to project from arm portions at the distal-end sides to the space between the arms and retract into the arm portions;
a first claw drive device configured to cause each of the first claw devices to perform projecting and retracting actions; and
a control device configured to control the travel drive device, the arm drive device, and the first claw drive device so that the automatic guided vehicle is allowed to travel along the conveyor at a travel speed faster than a transport speed of the article, the arm provided on the upstream side is allowed to project above the conveyor from the automatic guided vehicle, the arm provided on the downstream side is projected above the conveyor from the automatic guided vehicle when the arm provided on the upstream side in the transport direction moves to a position of the article being transported by the conveyor, and the pair of arms are retracted from above the conveyor into the automatic guided vehicle after each first claw device is projected from a distal-end side of each of the pair of arms to a space between the pair of arms in a state in which the article is located between the pair of arms, and
wherein the control device controls the travel drive device, the arm drive device, and the first claw drive device so that the automatic guided vehicle is moved to the lid body opening/closing device, each claw device is projected from a rear-end side of each of the pair of arms to the space between the pair of arms, and the pair of arms are pushed out from the automatic guided vehicle to a lid body opening/closing device side.

10. A storage housing of which a lid body is opened and closed by a lid body opening/closing device,
wherein the storage housing includes
a hollow main body consisting of a rectangular prism with an opening formed therein; and
a pair of lid bodies provided on two edges opposite to each other among edges of the main body forming the opening in a rectangular shape in top view and configured to open and close the opening,
wherein one edge of the lid body is rotatably supported on the edge of the main body,
wherein each lid body includes
a wide portion having a predetermined large dimension that is a width dimension in a direction orthogonal to a direction in which one edge of the lid body extends; and
a narrow portion having a predetermined small dimension smaller than the large dimension,
wherein the lid body opening/closing device includes
a rotation unit provided above a position where a storage housing is placed and configured to move toward or away from the storage housing and rotate around a virtual vertical line passing through the storage housing,
wherein the rotation unit includes
a lid suction pad configured to move toward the storage housing together with the rotation unit so that the lid suction pad is adsorbed to the lid body of the storage housing and to move together with the rotation unit in a direction away from the storage housing to raise and open the pair of lid bodies; and
an abutment member provided at a position on the rotation unit on an inner side of each of the pair of lid bodies raised by the lid suction pad and configured to rotate together with the rotation unit, contact the inner side of each of the pair of lid bodies, and push each of the pair of lid bodies from the inner side in a direction in which the pair of lid bodies are opened when the lid suction pad is detached from each of the pair of lid bodies, and
wherein the lid suction pad is adsorbed to an outer side of the wide portion of each of the pair of lid bodies when the lid suction pad is adsorbed to the lid body.
